(19) Europäisches Patentamt
European Patent Office
Office européen des brevets

(11) EP 2 133 145 A1

(12) # EUROPEAN PATENT APPLICATION
published in accordance with Art. 153(4) EPC

(43) Date of publication:
**16.12.2009 Bulletin 2009/51**

(21) Application number: **08721746.9**

(22) Date of filing: **10.03.2008**

(51) Int Cl.:
***B01J 31/22*** *(2006.01)* ***B01J 37/08*** *(2006.01)*
***H01M 4/88*** *(2006.01)* ***H01M 4/90*** *(2006.01)*
***H01M 8/10*** *(2006.01)*

(86) International application number:
**PCT/JP2008/054330**

(87) International publication number:
**WO 2008/111569 (18.09.2008 Gazette 2008/38)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.03.2007 JP 2007061014**
**09.03.2007 JP 2007061026**

(71) Applicants:
- **Sumitomo Chemical Company, Limited**
  **Tokyo 104-8260 (JP)**
- **National Institute of Advanced Industrial Science and Technology**
  **Tokyo 100-8921 (JP)**

(72) Inventors:
- **OKADA, Tatsuhiro**
  **Tsukuba-shi**
  **Ibaraki 305-0821 (JP)**
- **KOSHINO, Nobuyoshi**
  **Tsukuba-shi**
  **Ibaraki 305-0821 (JP)**
- **MATSUNAGA, Tadafumi**
  **Tsukuba-shi**
  **Ibaraki 305-0821 (JP)**
- **HIGASHIMURA, Hideyuki**
  **Tsukuba-shi**
  **Ibaraki 305-0045 (JP)**
- **SUENOBU, Katsuhiro**
  **Tsukuba-shi**
  **Ibaraki 305-0045 (JP)**
- **IWATA, Masatoshi**
  **Tsukuba-shi**
  **Ibaraki 305-0821 (JP)**

(74) Representative: **Vossius & Partner**
**Siebertstrasse 4**
**81675 München (DE)**

(54) **ELECTRODE CATALYST FOR FUEL CELL**

(57) An electrode catalyst for fuel cell, containing a multinuclear complex, in which the multinuclear complex contains 2 to 4 transition metal atoms coordinated with a ligand having 5 to 15 coordination atoms in its molecule; and an electrode catalyst for fuel cell, comprising a mononuclear metal complex containing, as a ligand, an organic compound containing two or more phenol rings and three or more aromatic heterocycles.

EP 2 133 145 A1

## Description

TECHNICAL FIELD

The present invention relates to an electrode catalyst for fuel cell.

TECHNICAL FIELD

In polymer electrolyte fuel cells that are being developed at present so as to be put to practical use, as an electrode catalyst thereof, platinum is generally used. However, there remain problems that platinum is high in costs and resources thereof will be depleted in the future since the reserve thereof is limited. JP-A-2006-260909 ("JP-A" means unexamined published Japanese patent application) discloses an electrode catalyst using palladium and JP-A-2004-217507 discloses an electrode catalyst using a protein as a raw material.
However, palladium is a precious metal like platinum and it is expected that it will be difficult to secure a stable supply in the future. Also, when a protein is used as a raw material, it is necessary to take care of handling, and for example, the raw material must be kept in cold storage.
Tatsuhiro Okada, et al. Electrochimica Acta, 45. 4419 (2000) discloses an electrode catalyst using a cobalt mononuclear complex. However, because the complex is a mononuclear complex having only one metal atom, it is unsuitable to a multiple electron transfer reaction and is placed in the state that hydrogen peroxide is easily produced.
For instance, a catalyst obtained by heat-treating a multinuclear complex containing bipyridine as a ligand is reported by Tatsuhiro Okada (National Institute of Advanced Industrial Science and Technology) "Development of an electrode catalyst for fuel cell using an organometal complex" Meeting of Japan Catalyst Society, Tsukuba Division (December 10, 2004).
However, the metal complex containing a low-molecular organic compound such as bipyridine as a ligand has catalyst activity insufficient to use it at a practical level and is desired to be more improved in catalyst activity.
Also, arrangement, space and magnetic properties of metal complexes can be controlled by regularly integrating a metal atom and an organic ligand and these metal complexes are expected to be applied to gas occluding bodies, proton conductive materials and molecular memories (see Susumu Kitagawa, Ryo Kitaura, Shin-ichiro Noro, Angewandte Chemie International Edition, 43, 2334 (2004)).
Among metal complexes, those having a transition metal atom as their center metals exhibit excellent catalyst activity as an oxygen-reduction catalyst and hydrogen peroxide decomposition catalyst (see Z. Liu, F. C. Anson, Inorganic Chemistry, 40, 1329 (2001); and M. D. Godbole et al., Europian Journal of Inorganic Chemistry, 305 (2005)).
Also, it is known that when a substituent capable of an acid-base interaction is arranged in the vicinity of a metal atom, a reaction chemical specie is trapped and therefore, catalyst activity is improved (see S. -Y. Liu, D. G. Nocara, Journal of American Chemical Society, 127, 5278 (2005)).
However, when the conventional metal complexes as mentioned above are used as a catalyst, the stability of the complex is insufficient, giving rise to the problem particularly when the reaction is conducted in the presence of an acid and when the reaction is conducted under heating. Therefore, it is desired to improve the stability of the metal complex catalyst in the presence of an acid or at high temperatures.
Tatsuhiro Okada, et al. Journal of Inorganic and organometallic Polymers, 9, 199, (1999) discloses an electrode catalyst for fuel cell obtained by heat-treating a cobalt mononuclear metal complex to stabilize.

DISCLOSURE OF INVENTION

According to the present invention, there can be provided a high-active catalyst favorable as an electrode catalyst for fuel cell.
Further, according to the present invention, there can be provided an electrode catalyst for fuel cell excellent in catalyst activity and stability.
According to the present invention, there is provided the following means:

[1] An electrode catalyst for fuel cell, comprising a multinuclear complex, wherein the multinuclear complex contains 2 to 4 transition metal atoms coordinated with a ligand having 5 to 15 coordination atoms in its molecule.
[2] The electrode catalyst for fuel cell according to [1], wherein the transition metal atoms of the multinuclear complex are at least one selected from the group consisting of vanadium, chromium, manganese, iron, cobalt, nickel and copper.
[3] The electrode catalyst for fuel cell according to [1] or [2], wherein the coordination atoms of the multinuclear complex are at least one selected from the group consisting of a nitrogen atom and an oxygen atom.
[4] The electrode catalyst for fuel cell according to any one of [1] to [3], wherein the transition metal atoms of the

multinuclear complex are crosslinked by an oxygen atom of an alkoxide or a phenoxide.

[5] The electrode catalyst for fuel cell according to any one of [1] to [4], wherein at least one of interatomic distances of transition metals arbitrarily-selected in the multinuclear complex is 3.6 Å or less.

[6] The electrode catalyst for fuel cell according to any one of [1] to [5], wherein the ligand is a ligand represented by the formula (I) or (II):

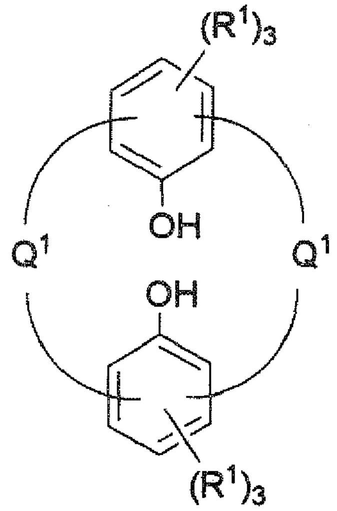

(I)

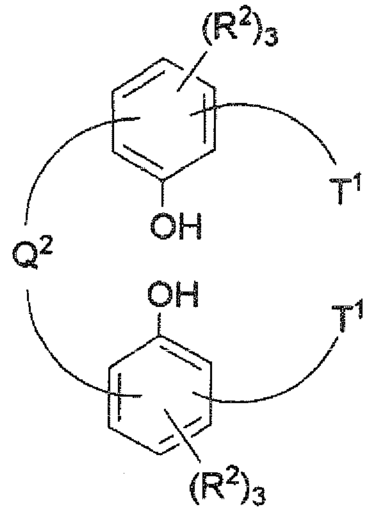

(II)

wherein $Q^1$ and $Q^2$ each represent a divalent organic group having at least two C=N bonds; $T^1$ represents a monovalent organic group having at least one C=N bond; $R^1$ and $R^2$ each independently represent a hydrogen atom or a substituent; two $R^1$s or $R^2$s may be bonded each other, respectively; $R^1$s and $R^2$s each may be the same or different; $Q^1$s each may be the same or different from each other; and $T^1$s may be the same or different from each other.

[7] An electrode catalyst for fuel cell obtained by heating the multinuclear complex according to any one of [1] to [6] at a temperature of 250°C or more and 1,500°C or less.

[8] An electrode catalyst for fuel cell, comprising a multinuclear complex mixture containing the Multinuclear complex according to any one of [1] to [6], a carbon support and/or a conductive polymer.

[9] An electrode catalyst for fuel cell produced by heating a multinuclear complex mixture containing the multinuclear complex according to any one of [1] to [6], a carbon support and/or a conductive polymer at a temperature of 250°C or more and 1,500°C or less.

[10] An electrode catalyst for fuel cell, comprising a mononuclear metal complex containing, as a ligand, an organic compound containing two or more phenol rings and three or more aromatic heterocycles.

[11] The electrode catalyst for fuel cell according to [10], wherein the mononuclear metal complex is represented by the formula (XI):

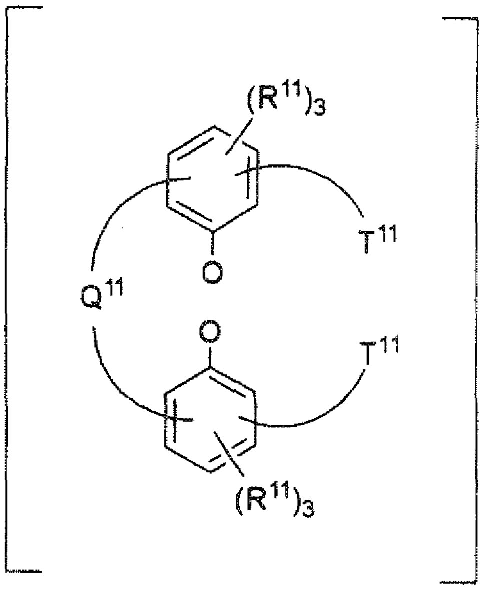

$MX_n$ (XI)

wherein $R^{11}$ denotes a hydrogen atom or a substituent; neighboring two $R^{11}$s may be bonded each other; $R^{11}$s may be the same or different from each other; $Q^{11}$ represents a divalent organic group having at least one aromatic heterocyclic group; $T^{11}$ represents a monovalent organic group having at least one aromatic heterocyclic group; two groups for $T^{11}$ may be the same or different from each other; M represents a transition metal atom; X represents a counter ion electrically neutralizing the metal complex or a neutral molecule; n represents the number of X's in the complex, and an integer of 0 or more; and when X's are present, the X's may be the same or different from each other.

[12] The electrode catalyst for fuel cell according to [11], wherein the acid dissociation constant pKa of a conjugate acid of the aromatic heterocycle constituting $T^{11}$ of the formula (XI) is -2.0 or more.
[13] The electrode catalyst for fuel cell according to any one of [10] to [12], wherein when one oxygen molecule is adsorbed to the mononuclear metal complex and the Mulliken charges of two oxygen atoms constituting the one oxygen molecule is calculated by the density functional method, the absolute value of a difference between the Mulliken charges of the two oxygen atoms is 0.020 to 0.062.
[14] The electrode catalyst for fuel cell according to any one of [10] to [13], wherein when one oxygen molecule is adsorbed to the mononuclear metal complex and the Mulliken charges of two oxygen atoms constituting the one oxygen molecule is calculated by the density functional method, the sum of the Mulliken charges of the two oxygen atoms is -0.25 or more.
[15] An electrode catalyst for fuel cell produced by heating the mononuclear metal complex according to any one of [10] to [14] at a temperature of 250°C or more and 1,500°C or less.
[16] An electrode catalyst for fuel cell, comprising a mononuclear metal complex mixture containing the mononuclear metal complex according to any one of [10] to [14], a carbon support and/or a conductive polymer.
[17] An electrode catalyst for fuel cell produced by heating a mononuclear metal complex mixture containing the mononuclear metal complex according to any one of [10] to [14], a carbon support and/or a conductive polymer at a temperature of 250°C or more and 1,500°C or less.

Hereinafter, a first embodiment of the present invention means to include the electrode catalysts for fuel cell described in the items [1] to [9] above.
A second embodiment of the present invention means to include the electrode catalysts for fuel cell described in the items [10] to [17] above.
Herein, the present invention means to include all of the above first and second embodiments, unless otherwise

specified.

Other and further features and advantages of the invention will appear more fully from the following description.

BEST MODE FOR CARRYING OUT THE INVENTION

In the catalyst according to the first embodiment of the present invention, a ligand having 5 to 15 coordination atoms in its molecule is coordinated with 2 to 4 transition metal atoms. Here, the coordinating atoms are, as described in page 966, Ryogo KUBO, et al., Encyclopedia of Physics and Chemistry 4th ed. (issued on Jan. 10, 1991 Iwanami Shoten), atoms having unshared electron pairs to donate electrons to an unoccupied orbital of the metal atoms and bonded with the metal atoms by coordination bonds.

Also, the transition metal atom with which the coordination atoms are to be coordinated in the multinuclear complex to be applied to the catalyst in the first embodiment of the present invention may be a no charged or a charged metal ion.

Examples of the above-mentioned metal atom are transition metals belonging to Period 4 to Period 6 of the periodic table.

Specifically, examples are metal atoms selected from a group consisting of scandium, titanium, vanadium, chromium, manganese, iron, cobalt, nickel, copper, yttrium, zirconium, niobium, molybdenum, ruthenium, rhodium, palladium, silver, lanthanum, cerium, praseodymium, neodymium, samarium, europium, gadolinium, terbium, dysprosium, holmium, erbium, thulium, ytterbium, lutetium, hafnium, tantalum, tungsten, rhenium, osmium, iridium, platinum and gold.

Among them, preferable examples are at least one metal atoms selected from a group consisting of scandium, titanium, vanadium, chromium, manganese, iron, cobalt, nickel, copper, yttrium, zirconium, niobium, molybdenum, silver, lanthanum, cerium, praseodymium, neodymium, samarium, europium, gadolinium, terbium, dysprosium, holmium, erbium, thulium, ytterbium, lutetium, hafnium, tantalum, and tungsten and more preferable examples are at least one metal atoms selected from a group consisting of scandium, titanium, vanadium, chromium, manganese, iron, cobalt, nickel, copper, zirconium, niobium, molybdenum, tantalum, and tungsten.

Among these atoms, particularly preferable examples are at least one metal atoms selected from a group consisting of vanadium, chromium, manganese, iron, cobalt, nickel, and copper and even more particularly preferable examples are at least one metal atoms selected from a group consisting of manganese, iron, cobalt, nickel, and copper.

Also, though the catalyst in the first embodiment of the present invention has 2 to 4 transition metal atoms, it has preferably 2 to 3 and more preferably 2 transition metal atoms.

Moreover, when at least one cobalt atom is contained as the transition metal atom in the catalyst of the first embodiment of the present invention, this is very preferable for the performance of the catalyst.

The ligand constituting the multinuclear complex in the above catalyst has 5 to 15 coordination atoms which can be combined with the transition metal atom. The total number of coordinating atoms of the ligand is preferably 5 to 12, more preferably 6 to 10, and even more preferably 6 to 8. Further, the coordinating atoms may be electrically neutral or charged ions.

The coordinating atom preferably is at least one selected from a nitrogen atom, an oxygen atom, a phosphorus atom and a sulfur atom and the coordinating atoms may be the same or different from each other. They are more preferably selected from a nitrogen atom, an oxygen atom, and a sulfur atom; and even more preferably selected from a nitrogen atom and an oxygen atom.

The transition metal atoms of the multinuclear complex in the first embodiment of the present invention are preferably crosslinked by an oxygen atom of an alkoxide or a phenoxide because this improves the effect of arranging the transition metal atom at a distance fitted for an electrode reaction.

The alkoxide is those obtained by the emission of a proton of a hydroxy group (OH) of an alcohol ($R^{\alpha}OH$), wherein $R^{\alpha}$ represents an alkyl group. Specific examples of the alkyl group include a methyl group, an ethyl group, a propyl group, an isopropyl group, a butyl group, an isobutyl group, a sec-butyl group, a tert-butyl group, a pentyl group, a hexyl group, a nonyl group, a dodecyl group, a pentadecyl group, an octadecyl group, a dococyl group, a cyclopropyl group, a cyclobutyl group, a cyclopentyl group, a cyclohexyl group, a cyclononyl group, a cyclododecyl group, a norbonyl group, an adamantyl group, a phenylmethyl group, a 1-phenylethyl group, a 2-phenylethyl group, a 1-phenyl-1-propyl group, a 1-phenyl-2-propyl group, a 2-phenyl-2-propyl group, a 3-phenyl-1-propyl group, a 4-phenyl-1-butyl group, a 5-phenyl-1-pentyl group and a 6-phenyl-1-hexyl group.

The phenoxide is those obtained by the emission of a proton of a hydroxy group (OH) of a phenol ($R^{\beta}OH$), wherein $R^{\beta}$ represents a monovalent aryl group. Specific examples of the aryl group include a phenyl group, 1-naphthyl group, 2-naphthyl group, 2-methylphenyl group, 3-methylphenyl group, 4-methylphenyl group, 4-methylphenyl group, 4-propylphenyl group, 4-isopropylphenyl group, 4-butylphenyl group, 4-tert-butylphenyl group, 4-hexylphenyl group, 4-cyclohexylphenyl group, 4-adamantylphenyl group and 4-phenylphenyl group.

Also, when at least one of the interatomic distances between transition metals arbitrarily-selected in the multinuclear complex in the first embodiment of the present invention is 3.6 Å or less, it is expected that the interaction

between the transition metal atom and a hydrogen molecule or oxygen molecule is intensified, bringing about such an effect that more higher catalyst activity is obtained. The interatomic distance between the transition metals is more preferably 3.4 Å or less, even more preferably 3.2 Å or less, and particularly more preferably 3.0 Å or less. When the interatomic distance between the transition metals is too small on the other hand, the repulsion among transition metal atoms is strengthened, causing the catalyst to be unstable. Therefore, the interatomic distance between the transition metals is preferably 1.8 Å or more, more preferably 2.0 Å or more and even more preferably 2.2 Å or more. As the interatomic distance between transition metals, the values reported in various documents may be used though the interatomic distance can be found by X-ray crystal structure analysis. Alternatively, the interatomic distance between transition metals can be found by structure optimization calculation based on the density functional method. Materials Studio Dmol$^3$ version 4.2 (manufactured by Accelrys K.K.) is used for the structure optimization calculation based on the density functional method.

In the catalyst of the first embodiment of the present invention, it is essential that the ligand of the multinuclear complex has 5 to 15 coordination atoms and a ligand represented by the following formula (I) or a ligand represented by the following formula (II) may be given as preferable examples.

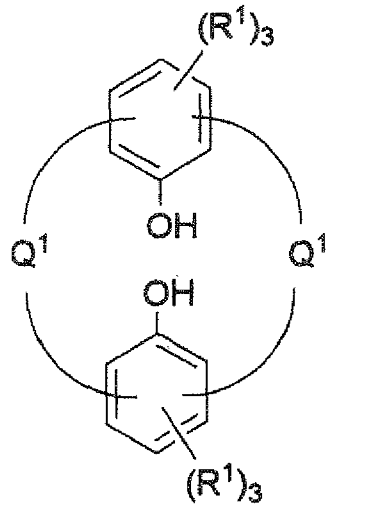

(I)

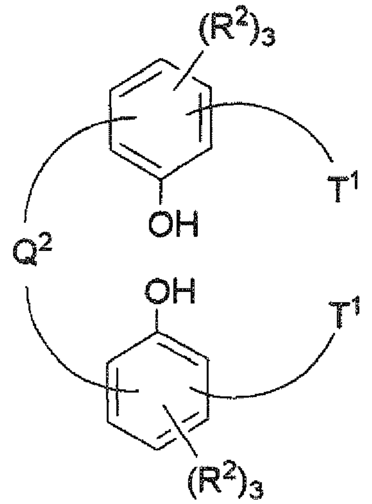

(II)

wherein $Q^1$ and $Q^2$ each represent a divalent organic group having at least two C=N bonds; $T^1$ represents a monovalent organic group having at least one C=N bond; $R^1$ and $R^2$ each independently represent a hydrogen atom or a substituent; two $R^1$s or $R^2$s may be bonded each other, respectively; $R^1$s and $R^2$s each may be the same or different from each other.

The hydroxy group (OH) in the formula (I) and (II) is a phenoxy group from which a proton is released and may be coordinated with metal atom(s).

When $R^1$ and $R^2$ in the above formula (I) or (II) are substituents, examples of these substituents include a hydroxyl group, an amino group, a nitro group, a cyano group, a carboxyl group, a formyl group, a hydroxysulfonyl group, a halogen atom, a monovalent hydrocarbon group which may be substituted, a hydrocarbyloxy group which may be substituted (hydrocarbon oxy group which may be substituted), an amino group substituted with two monovalent hydrocarbon groups which may be unsubstituted or substituted (namely, hydrocarbon disubstituted amino group which may be substituted), a hydrocarbylmercapto group which may be substituted (hydrocarbon mercapto group which may be substituted), a hydrocarbylcarbonyl group which may be substituted (hydrocarbon carbonyl group which may be substituted), a hydrocarbyloxycarbonyl group which may be substituted (hydrocarbon oxycarbonyl group which may be substituted), an aminocarbonyl group substituted with two monovalent hydrocarbon groups which may be unsubstituted or substituted (namely, hydrocarbon disubstituted aminocarbonyl group which may be substituted) and a hydrocarbyloxysulfonyl group which may be substituted (hydrocarbon sulfonyl group which may be substituted). Among these groups, a monovalent hydrocarbon group which may be substituted, a hydrocarbyloxy group which may be substituted, an amino group substituted with two monovalent hydrocarbon groups which may be unsubstituted or substituted, a hydrocarbylmercapto group which may be substituted, a hydrocarbylcarbonyl group which may be substituted and a hydrocarbyloxycarbonyl group which may be substituted are preferable, a monovalent hydrocarbon group which may be substituted, a hydrocarbyloxy group which may be substituted and an amino group substituted with two monovalent hydrocarbon groups which may be unsubstituted or substituted are more preferable, and a monovalent hydrocarbon group which may be substituted and a hydrocarbyloxy group which may be substituted are even more preferable. In these groups, a nitrogen atom to which a hydrogen atom is bonded is preferably substituted with a monovalent hydrocarbon group. Further, when the group represented by $R^1$ has more than one substituents, two substituents may be combined to form a ring.

Examples of the monovalent hydrocarbon group represented by the above $R^1$ include alkyl groups having 1 to 50 carbon atoms (preferably, alkyl groups having 1 to 20 carbon atoms) such as a methyl group, an ethyl group, a propyl group, an isopropyl group, a butyl group, an isobutyl group, a sec-butyl group, a tert-butyl group, a pentyl group, a hexyl group, a nonyl group, a dodecyl group, a pentadecyl group, an octadecyl group and a docosyl group; cyclic saturated hydrocarbon groups having 3 to 50 carbon atoms (preferably, cyclic saturated hydrocarbon groups having 3 to 20 carbon atoms) such as a cyclopropyl group, a cyclobutyl group, a cyclopentyl group, a cyclohexyl group, a cyclononyl group, a cyclododecyl group, a norbornyl group and an adamantyl group; alkenyl groups having 2 to 50 carbon atoms (preferably, alkenyl groups having 2 to 20 carbon atoms) such as an ethenyl group, a propenyl group, a 3-butenyl group, a 2-butenyl group, a 2-pentenyl group, a 2-hexenyl group, a 2-nonenyl group and a 2-dodecenyl group; aryl groups having 6 to 50 carbon atoms (preferably, aryl groups having 6 to 20 carbon atoms) such as a phenyl group, a 1-naphthyl group, a 2-naphthyl group, a 2-methylphenyl group, a 3-methylphenyl group, a 4-methylphenyl group, a 4-ethylphenyl group, a 4-propylphenyl group, a 4-isopropylphenyl group, a 4-butylphenyl group, a 4-tert-butylphenyl group, a 4-hexylphenyl group, a 4-cyclohexylphenyl group, a 4-adamantylphenyl group and a 4-phenylphenyl group; and aralkyl groups having 7 to 50 carbon atoms (preferably, aralkyl groups having 7 to 20 carbon atoms) such as a phenylmethyl group, a 1-phenylethyl group, a 2-phenylethyl group, a 1-phenyl-1-propyl group, a 1-phenyl-2-propyl group, a 2-phenyl-2-propyl group, a 3-phenyl-1-propyl group, a 4-phenyl-1-butyl group, a 5-phenyl-1-pentyl group and a 6-phenyl-1-hexyl group.

As the monovalent hydrocarbon group represented by $R^1$, hydrocarbon groups having 1 to 20 carbon atoms are preferable, hydrocarbon groups having 1 to 12 carbon atoms are more preferable, hydrocarbon groups having 2 to 12 carbon atoms are even more preferable, hydrocarbon groups having 1 to 10 carbon atoms are even more preferable, hydrocarbon groups having 3 to 10 carbon atoms are even more preferable, alkyl groups having 1 to 10 carbon atoms are even more preferable and alkyl groups having 3 to 10 carbon atoms are further more preferable.

The hydrocarbyloxy, hydrocarbylmercapto, hydrocarbylcarbonyl, hydrocarbyloxycarbonyl and hydrocarbylsulfonyl group respectively represented by $R^1$ are groups obtained by bonding one of the aforementioned monovalent hydrocarbon groups to an oxy, mercapto, carbonyl, oxycarbonyl and sulfonyl group respectively.

The "amino group substituted with two monovalent hydrocarbon groups which may be unsubstituted or substituted" and "aminocarbonyl group substituted with two monovalent hydrocarbon groups which may be unsubstituted or substituted" represented by $R^1$ are groups in which two hydrogen atoms in an amino group and aminocarbonyl group (namely, $-C(=O)-NH_2$) are respectively substituted with the aforementioned monovalent hydrocarbon groups. Specific examples and preferable examples of monovalent hydrocarbon group contained therein are the same as the monovalent hydrocarbon groups represented by $R^1$.

In the monovalent hydrocarbon group, hydrocarbyloxy group, hydrocarbylmercapto group, hydrocarbylcarbonyl group, hydrocarbyloxycarbonyl group and hydrocarbylsulfonyl group represented by $R^1$, a part or all of the hydrogen atoms contained in these groups may be substituted with, for example, a halogen atom, a hydroxyl group, an amino group, a nitro group, a cyano group, a monovalent hydrocarbon group which may be substituted,a hydrocarbyloxy group which may be substituted, a hydrocarbylmercapto group which may be substituted, a hydrocarbylcarbonyl group which

may be substituted, a hydrocarbyloxycarbonyl group which may be substituted and a hydrocarbylsulfonyl group which may be substituted.

Among the above $R^1$, a hydrogen atom, a methyl group, an ethyl group, a propyl group, an isopropyl group, a n-butyl group, an isobutyl group, a tert-butyl group, a phenyl group, a methylphenyl group, a naphthyl group and a pyridyl group are particularly preferable.

$Q^1$ and $Q^2$, in the formula (I) or (II), each represent a divalent organic group having at least two C=N bonds. The divalent organic group is preferably a divalent organic group represented by the formula (III-a) or (III-b).

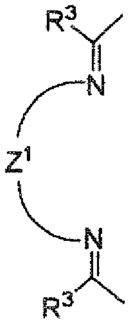

(III-a)

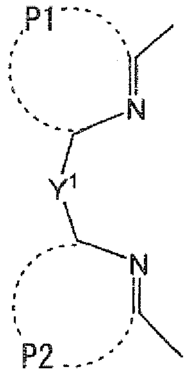

(III-b)

In formula (III-a) or (III-b), $R^3$ has the same meanings as those of $R^1$ or $R^2$ in the formula (I) or (II); $R^3$s may be the same or different from each other; $Z^1$ represents a divalent organic group; P1 and P2 are respectively a group of atoms necessary for forming, by linking with one C= N-C, an aromatic heterocycle which may be substituted; P1 and P2 may be bonded each other to form a ring; P1 and P2 may be the same or different from each other; and $Y^1$ represents a single bond, double bond, or linking group.

$Z^1$ in the formula (III-a) represents a divalent organic group and examples of $Z^1$ include an alkylene group which may be substituted and aromatic group which may be substituted.

Examples of the alkylene group which may be represented by $Z^1$ may be linear, branched, and cyclic alkylene groups having 1 to 20, preferably 1 to 10, more preferably 2 to 10 carbon atoms in total such as a methylene group, an ethylene group, a 1,1-propylene group, a 1,2-propylene group, a 1,3-propylene group, a 2,4-butylene group, a 2,4-dimethyl-2,4-butylene group, a 1,2-cyclopentylene group, and a 1,2-cyclohexylene group. The alkylene group may be substituted by a substituent represented by $R^1$ or $R^2$.

The (un)substituted aromatic group which may be represented by $Z^1$ is a divalent group derived from an aromatic compound by removing two hydrogen atoms. Examples of the aromatic compound may be aromatic compounds having about 6 to 60, preferably 4 to 60 carbon atoms in total such as benzene, naphthalene, anthracene, tetracene, biphenyl, dibenzofuran, thiophene, benzothiophene, dibenzothiophene, pyridine, pyradine, phenol, naphthol, binaphthyl, and phenanthrene. The aromatic group may be substituted by a substituent represented by $R^1$ or $R^2$.

Preferable examples of the divalent organic group represented by the formula (III-a) are compounds exemplified by the following formulas (III-a-1) to (III-a-9), more preferable examples are compounds exemplified by the following formulas (III-a-1) to (III-a-6).

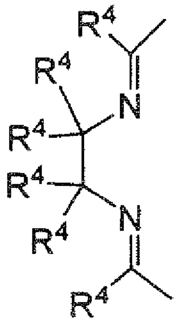
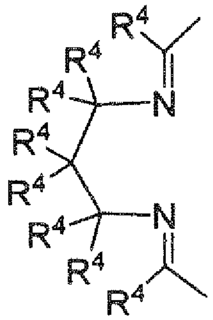
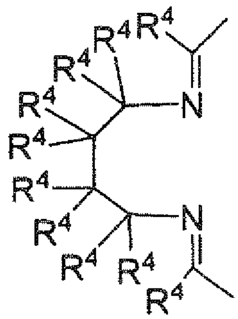
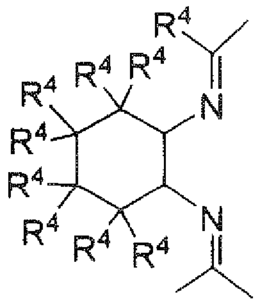

(III-a-1) (III-a-2) (III-a-3) (III-a-4)

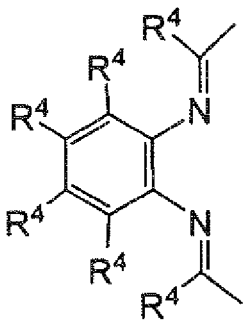
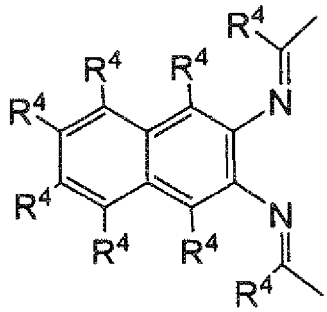
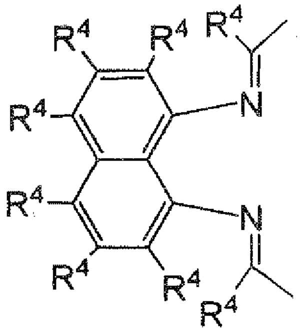

(III-a-5) (III-a-6) (III-a-7)

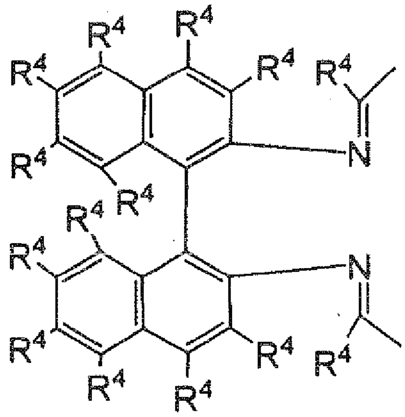
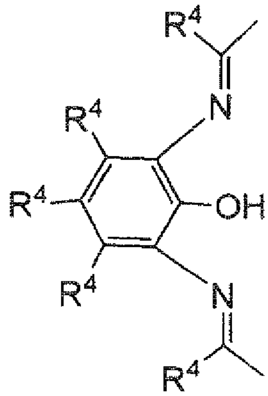

(III-a-8) (III-a-9)

Herein, $R^4$ has the same meanings as those of $R^1$ or $R^2$ in the formula (I) or (II); and $R^4$s may be the same or different from each other.

Specific examples of the (un)substituted aromatic heterocycle which is formed as P1 and P2 in the above formula (III-b) bond to C-N=C include pyridine, pyrazine, pyrimidine, thiazole, imidazole, oxazole, triazole, benzoimidazole, isoquinoline and quinazoline. These heterocycles may be substituted with a substituent represented by the above $R^1$. Among these heterocycles, pyridine, pyrazine, pyrimidine, thiazole, imidazole, oxazole, triazole and benzoimidazole are preferable; and pyridine, thiazole, imidazole and oxazole are more preferable.

Also, the above aromatic heterocycles may be combined with each other to form a ring and preferable examples include those having the following structures (IV-1) to (IV-6) and more preferable examples include those having the following structures (IV-1) to (IV-3).

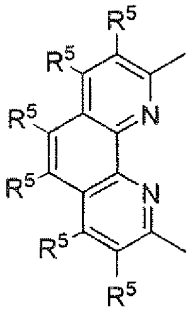
(IV-1)

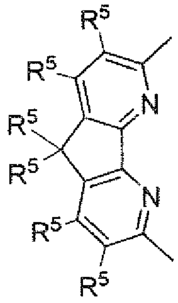
(IV-2)

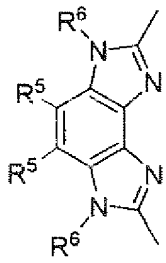
(IV-3)

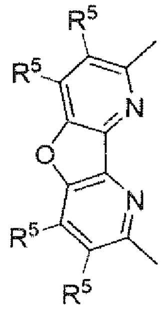
(IV-4)

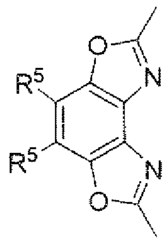
(IV-5)

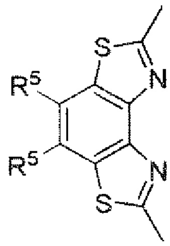
(IV-6)

Herein, $R^5$ has the same meanings as those of $R^1$ or $R^2$ in the formula (I) or (II); $R^5$s may be the same or different from each other; $R^6$ represents a hydrogen atom or a monovalent hydrocarbon group having 1 to 30 carbon atoms; and $R^6$s may be the same or different from each other.

$T^1$ in the above formula (II) is a monovalent organic group having at least one C=N bond and examples of the monovalent organic group may include monovalent organic groups represented by the following formula (V-a) or (V-b).

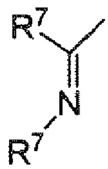
(V-a)

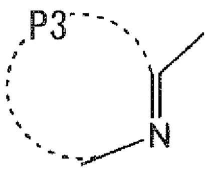
(V-b)

Herein, $R^7$ has the same meanings as those of $R^1$ or $R^2$ in the formula (I) or (II); P3 is a group of atoms necessary for forming an (un)substituted aromatic heterocycle, by linking with one C=N-C; and $R^7$s may be the same or different from each other.

Specific examples of the (un)substituted aromatic heterocycle which is formed by P3 in the above formula (V-b) include pyridine, pyrazine, pyrimidine, thiazole, imidazole, oxazole, triazole, benzoimidazole, quinoline, isoquinoline, cinnoline, phthalazine, quinazoline, quinoxaline and benzodiazine. Among these heterocycles, pyridine, pyrazine, pyrimidine, thiazole, imidazole, oxazole, triazole and benzoimidazole are preferable and pyridine, thiazole, imidazole and oxazole are more preferable. These heterocycles may be substituted with a substituent represented by the above $R^1$.
For example, the ligand of the compound represented by the formula (I) may be synthesized by reacting a phenol compound having an aldehyde group with a compound having an amino group in a solvent such as an alcohol as described in Journal of Organic Chemistry, 69, 5419 (2004). Also, an intended metal complex can be directly synthesized by adding a metal salt in the reaction system as described in Australian Journal of Chemistry, 23, 2225 (1970).
As described in a nonpatent literature "Tetrahedron., 1999, 55, 8377.", the ligand represented by the formula (II) can be synthesized by: performing an addition reaction of an organometallic reaction agent to a heterocyclic compound; oxidizing the resultant; subjecting the resultant to a halogenation reaction; and subjecting the resultant to a cross-coupling reaction with a transition metal catalyst. Also, an intended ligand can also be synthesized by a stepwise cross-coupling reaction using a halogenated compound having a heterocycle.

Here, as the ligand represented by the formula (I) or (II), ligands represented by the following formulae (VI-1) to (VI-14) are given as examples. Among these ligands, ligands represented by the formulae (VI- 1) to (VI-8) are preferable. In formulae (VI-1) to (VI-14), Me and $^t$Bu represent methyl and tert-butyl, respectively.

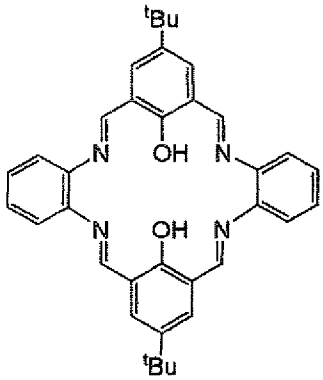
(VI-1)

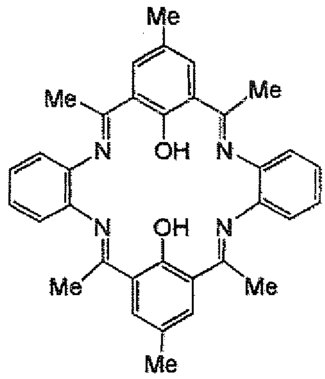
(VI-2)

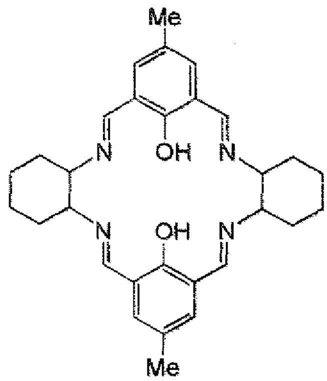
(VI-3)

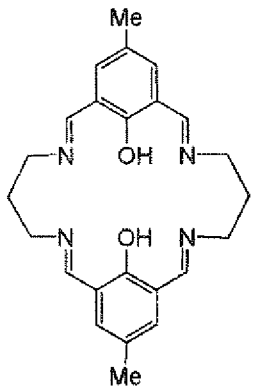
(VI-4)

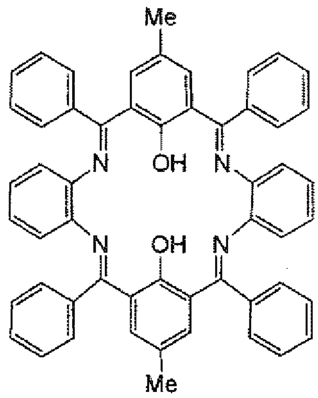
(VI-5)

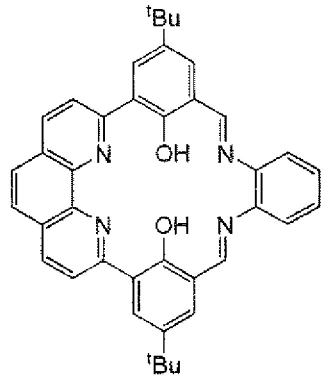
(VI-6)

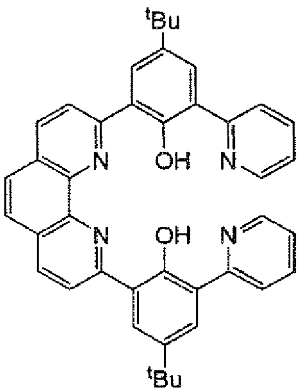
(VI-7)

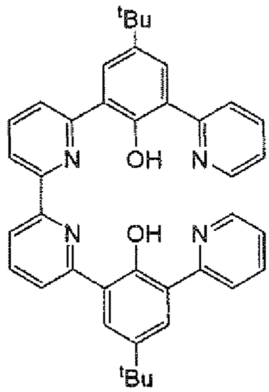
(VI-8)

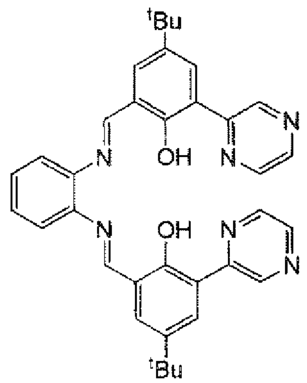
(VI-9)

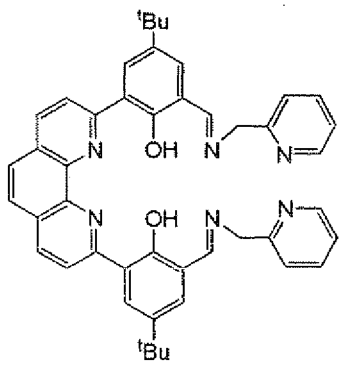

(VI-10)

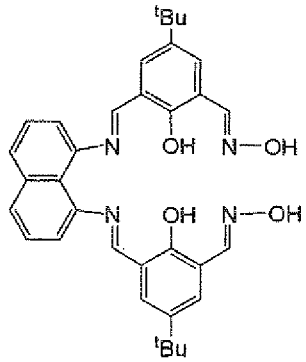

(VI-11)

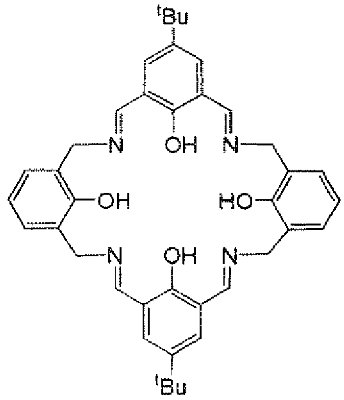

(VI-12)

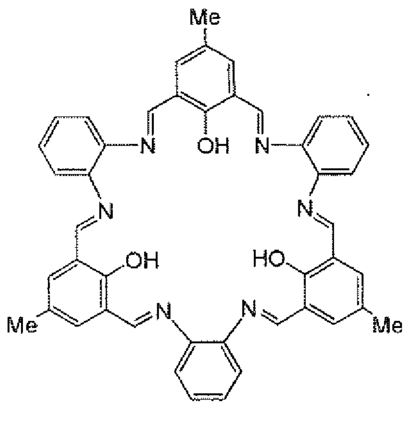

(VI-13)

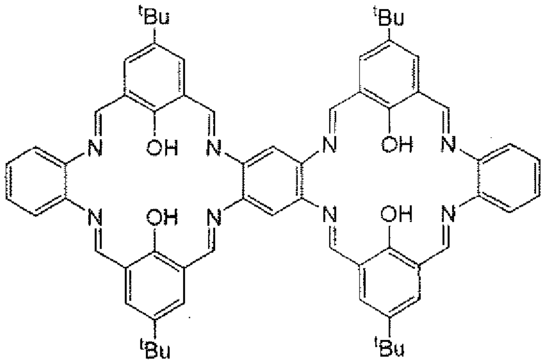

(VI-14)

The multinuclear complex used as the catalyst in the present invention may be synthesized by mixing a compound represented by the above formula (I) or (II) with a reaction agent (hereinafter referred to as "metal-donating agent") which imparts a metal atom in an appropriate reaction solvent. As the metal-donating agent, an acetate, chloride, sulfate or carbonate of the exemplified transition metals and the like may be used. Also, the multinuclear complex having a compound represented by the formula (I) as the ligand may also be synthesized by adding a metal-donating agent to a phenol compound having an aldehyde and a compound having an amino group as mentioned above. Examples of the reaction solvent include water, acetic acid, oxalic acid, ammonia water, methanol, ethanol, n-propanol, isopropyl alcohol, 2-methoxyethanol, 1-butanol, 1,1-dimethylethanol, ethylene glycol, diethyl ether, 1,2-dimethoxyethane, methylethyl ether, 1,4-dioxane, tetrahydrofuran, benzene, toluene, xylene, mesitylene, durene, decalin, dichloromethane, chloroform, carbon tetrachloride, chlorobenzene, 1,2-dichlorobenzene, N,N'-dimethylformamide, N,N'-dimethyl acetamide, N-methyl-2-pyrrolidone, dimethylsulfoxide, acetone, acetonitrile, benzonitrile, triethylamine, and pyridine. A reaction solvent obtained by mixing at least two kinds of them may be used and a solvent which can dissolve a ligand and a metal-donating agent is preferred. The reaction can be performed at a temperature of generally -10 to 200°C, preferably 0 to 150°C, or particularly preferably 0 to 100°C for a time period of generally 1 minute to 1 week, preferably 5 minutes to 24 hours, or particularly preferably 1 hour to 12 hours. It should be noted that the reaction temperature and the reaction time can also be appropriately optimized depending on the kinds of the ligand and the metal-donating agent.
An optimum method selected from a known recrystallization method, a known reprecipitation method, and a known chromatography method can be appropriately employed as a method involving isolating the produced multinuclear complex from the reaction solution after the reaction and purifying the multinuclear complex, and two or more of these methods may be employed in combination.
It should be noted that the produced multinuclear complex may deposit depending on the reaction solvent; the deposited multinuclear complex can be isolated and purified by separating the multinuclear complex by a solid-liquid separation

method such as filtration and subjecting the separated product to a washing operation and a drying operation as required.

The catalyst of the first embodiment of the present invention has a multinuclear complex, and the multinuclear complex contains 2 to 4 transition metal atoms coordinated with a ligand having 5 to 15 coordination atoms in its molecule. The catalyst may contain other ligands besides the above ligands. As such other ligands, compounds which are ionic or electrically neutral may be used. When these other ligands are contained, these other ligands may be the same or different.

Here, as the multinuclear complex having a ligand represented by the formula (I) or (II), multinuclear complexes having a ligand represented by the following formulae (VII-1) to (VII-14) are given as examples. In the formulae, $M^1$, $M^2$, $M^3$ and $M^4$ respectively represent a transition metal atom and specific examples of them include the aforementioned transition atoms. $M^1$, $M^2$, $M^3$ and $M^4$ may be the same or different from each other. Me and $^t$Bu represent methyl and tert-butyl, respectively. In the formulae, the charges of the multinuclear complexes are omitted.

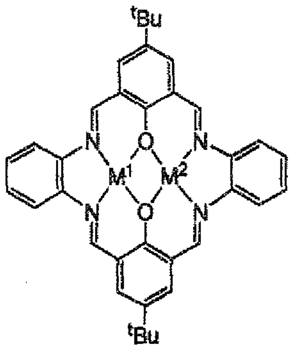

(VII-1)

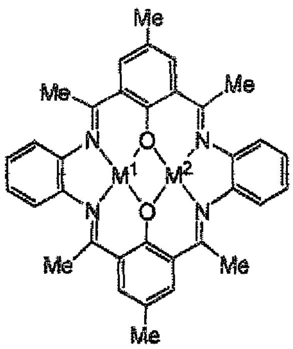

(VII-2)

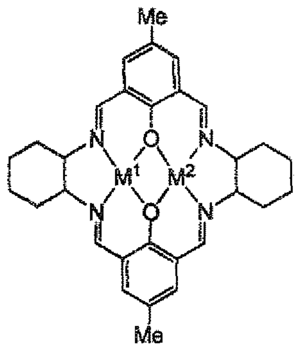

(VII-3)

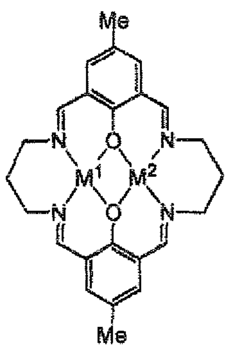

(VII-4)

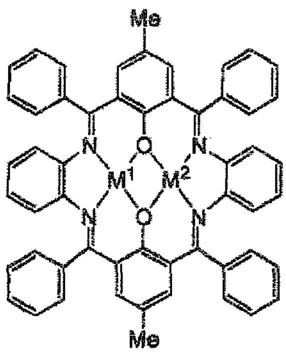

(VII-5)

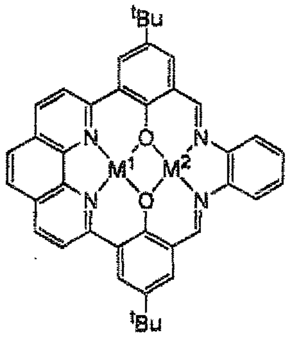

(VII-6)

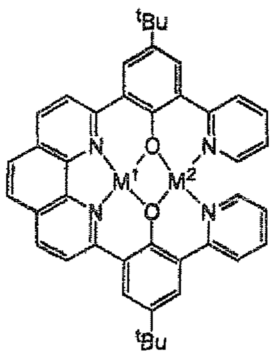

(VII-7)

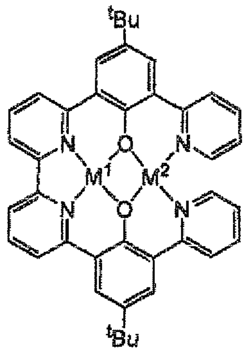

(VII-8)

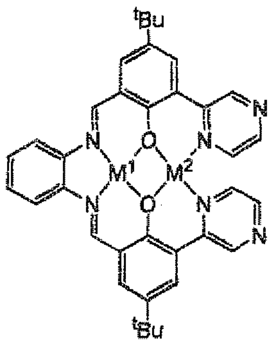

(VII-9)

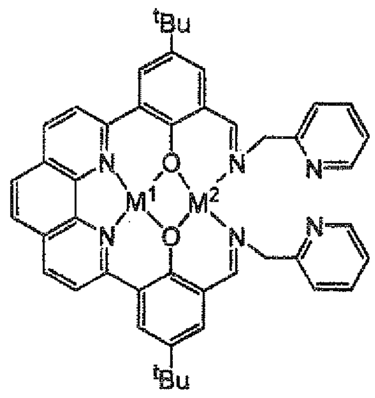

(VII-10)

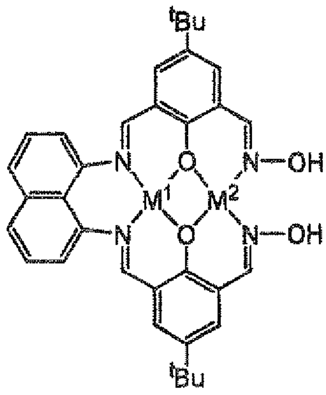

(VII-11)

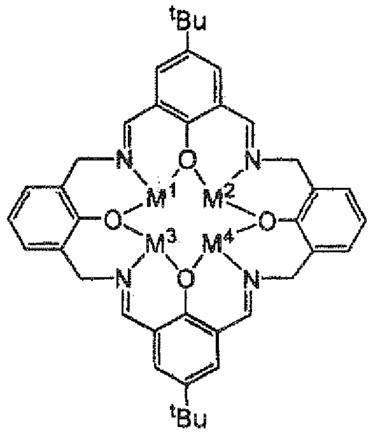

(VII-12)

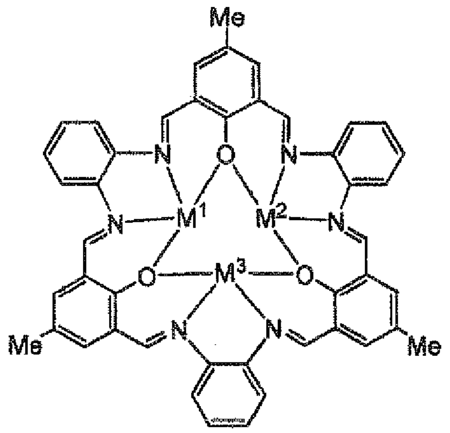

(VII-13)

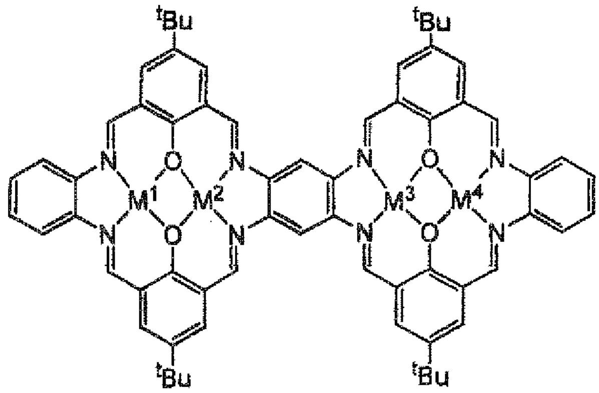

(VII-14)

Examples of the electrically neutral compound for the above-described another ligand may include nitrogen atom-containing compounds such as ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, thiazole, isothiazole, indole, indazole, quinoline, isoquinoline, phenantrizine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N,N'-dioxide, oxamide, dimethyl glyoxime, and o-aminophenol; oxygen-containing compounds such as water, methanol, ethanol, 1-propanol, 2-propanol, n-butyl alcohol, iso-butyl alcohol, sec-butyl alcohol, tert-butyl alcohol, 2-methoxyethanol, phenol, oxalic acid, catechol, salicylic acid, phthalic acid, 2,4-pentanedione, 1,1,1-trifluoro-2,4-pentanedione, hexafluoropentanedione, 1,3-diphenyl-1,3-propanedione, and 2,2'-binaphthol; sulfur-containing compounds such as dimethyl sulfoxide and urea; and phosphorus-containing compounds such as 1,2-bis(dimethylphosphino)ethane and 1,2-phenylenebis(dimethylphosphine).
Among them, preferable examples are ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, indole, indazole, quinoline, isoquinoline, phenantrizine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N,N'-dioxide, oxamide, dimethyl glyoxime, o-aminophenol, water, phenol, oxalic acid, catechol, salicylic acid, phthalic acid, 2,4-pentanedione, 1,1,1-trifluoro-2,4-pentanedione, hexafluoropentanedione, 1,3-diphenyl-1,3-propanedione, and 2,2'-binaphthol; and more preferable examples are ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, indole, indazole, quinoline, isoquinoline, phenantrizine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N,N'-dioxide, o-aminophenol, phenol, catechol, salicylic acid, phthalic acid, 1,3-diphenyl-1,3-propanedione, and 2,2'-binaphthol.

Among them, particularly more preferable examples are pyridine, pyrrole, pyridazine, pyrimidine, pyrazine, pyrazole, imidazole, oxazole, indole, quinoline, isoquinoline, acridine, 2,2'-bipyridine, 4,4'-bipyridine, 1,10-phenanthroline, phenylenediamine, pyridine-N-oxide, 2,2'-bipyridine-N,N'-dioxide, o-aminophenol, and phenol.

Further, examples of a ligand having anionic property are a hydroxide ion, a peroxide, a superoxide, a cyanide ion, a thiocyanate ion; halide ions, such as a fluoride ion, a chloride ion, a bromide ion, and an iodide ion, a sulfate ion, a nitrate ion, a carbonate ion, a perchlorate ion, a tetrafluoroborate ion; tetraaryl borate ions such as a tetraphenyl borate ion; a hexafluorophosphate ion, a methanesulfonate ion, a trifluoromethanesulfonate ion, a p-toluenesulfonate ion, a benzenesulfonate ion, a phosphate ion, a phosphite ion, an acetate ion, a trifluoroacetate ion, a propionate ion, a benzoate ion, metal oxide ions, a methoxide ion, and ethoxide ion and the like.

Preferable examples are a hydroxide ion, a sulfate ion, a nitrate ion, a carbonate ion, a perchlorate ion, a tetrafluoroborate ion, a tetraphenyl borate ion, a hexafluorophosphate ion, a methanesulfonate ion, a trifluoromethanesulfonate ion, a p-toluenesulfonate ion, a benzenesulfonate ion, a phosphate ion, an acetate ion, and a trifluoroacetate ion, and particularly preferable examples among them are a hydroxide ion, a sulfate ion, a nitrate ion, a carbonate ion, a tetraphenyl borate ion, a trifluoromethanesulfonate ion, a p-toluenesulfonate ion, an acetate ion, and a trifluoroacetate ion.

Further, the ions exemplified above as a ligand having an anionic property may be a counter ion electrically neutralizing the multinuclear metal complex of the present invention.

Further, the multinuclear complex may sometimes include a counter ion having a cationic property to keep the electric neutrality. Examples of the counter ion having the cationic property may be alkali metal ions, alkaline earth metal ions; tetraalkylammonium ions such as a tetra(n-butyl)ammonium ion and a tetraethylammonium ion; and tetraarylphosphonium ions such as a tetraphenylphosphonium ion and specific examples are a lithium ion, a sodium ion, a potassium ion, a rubidium ion, a cesium ion, a magnesium ion, a calcium ion, a strontium ion, a barium ion, a tetra(n-butyl)ammonium ion, a tetraethylammonium ion, and a tetraphenylphosphonium ion and more preferable examples are a tetra(n-butyl) ammonium ion, a tetraethylammonium ion, and a tetraphenylphosphonium ion.

Particularly preferable among them are, as a counter ion having a cationic property, a tetra(n-butyl)ammonium ion and a tetraethylammonium ion.

In one of the preferred embodiments of the present invention, the above multinuclear complex may be used as the catalyst or may be heat-treated prior to use as the catalyst. However, it is preferable to use the multinuclear complex after it is heat-treated when this catalyst is prepared.

Next, the heat treatment condition of the multinuclear complex used in the present invention will be described in detail. The multinuclear complex to be used for the heat treatment may be one multinuclear complex or two or more multinuclear complexes.

As pretreatment for the heat treatment, the multinuclear complex is particularly preferable to be dried at a temperature of 15°C or higher and 200°C or lower under reduced pressure of 1333 Pa (10 Torr) or lower for 6 hours or longer. The pretreatment may be carried out using a vacuum drier or the like.

As to the atmosphere used in the heat-treatment of the multinuclear complex, the multinuclear complex is preferably heat-treated in a reducing atmosphere such as hydrogen or carbon monoxide, an oxidizing atmosphere such as oxygen, carbonic acid gas or water vapor, an inert gas atmosphere such as nitrogen, helium, neon, argon, krypton or xenon, or in the presence of gas or vapor of a nitrogen-containing compound such as ammonia and acetonitrile or of a mixture of these gases. More preferably, the reducing atmosphere is a hydrogen atmosphere or a mixture gas atmosphere containing hydrogen and the above inert gas, the oxidizing atmosphere is an oxygen atmosphere or a mixture gas atmosphere containing oxygen and the above inert gas and the inert gas atmosphere is a nitrogen, neon or argon atmosphere or a mixture gas atmosphere containing these gases.

Also, the pressure in relation to the heat treatment is, though not particularly limited to, preferably in the vicinity of normal pressure, that is, about 0.5 to 1.5 atmospheres.

The temperature for the heating treatment of the multinuclear complex is preferably 250°C or higher, more preferably 300°C or higher, furthermore preferably 400°C or higher, and even more preferably 500°C or higher. Further, it is preferably 1,500°C or lower, more preferably 1,200 °C or lower, and even more preferably 1,000°C or lower.

The treatment time for the heating treatment may be set properly depending on the above-mentioned gas to be used, temperature, and the like and in the state that the above-mentioned gas is tightly closed or ventilated, the temperature is gradually increased from room temperature to an aimed temperature and thereafter, it may be decreased immediately. Particularly, it is preferable to keep the temperature after the temperature reaches the aimed temperature since the multinuclear complex can be gradually modified and the durability can be improved more. The retention time after the temperature reaching the aimed temperature is preferably 1 to 100 hours, more preferably 1 to 40 hours, furthermore preferably 2 to 10 hours, and even more preferably 2 to 3 hours.

An apparatus for the heating treatment is not either particularly limited and a tubular furnace, an oven, a furnace, an IH hot plate, and the like can be exemplified.

Next, another embodiment of the electrode catalyst for fuel cell of the present invention will be explained.

The electrode catalyst for fuel cell may be constituted of a multinuclear complex mixture containing the above multinuclear complex, a carbon support (carrier) and/or a conductive polymer as mentioned above. This structure is useful from the viewpoint of improving the stability of the catalyst and catalyst activity.

In the multinuclear complex mixture, the ratio of the multinuclear complex, carbon support and conductive polymer to be mixed is preferably designed such that the content of the multinuclear complex is 1 to 70% by mass based on the total mass of the multinuclear complex, carbon support and conductive polymer. The content of the multinuclear complex is preferably 2 to 60% by mass and more preferably 3 to 50% by weight.

Examples of the carbon carrier include carbon particles such as Norit (trade name, manufactured by Norit corporate), Ketjen black (trade name, manufactured by Lion Corporation), Vulcan (trade name, manufactured by Cabot Corporation), black pearl (trade name, manufactured by Cabot Corporation), acetylene black (trade name, manufactured by Chevron Corporation); fullerene such as C60 and C70; carbon nanotubes, carbon nanohorns, carbon fibers and the like.

Such a multinuclear complex mixture may be heat-treated to make an electrode catalyst for fuel cell, and the condition of the heat treatment is the same as those used when the above multinuclear complex is heat-treated.

Examples of the conductive polymer are polyacetylene, polyaniline, polypyrrole and the like. The above multinuclear complex, carbon support, conductive polymer may be used either singly or in combinations of two or more.

Next, the second embodiment of the present invention is described below.

The inventors of the present invention have found that the introduction of phenol rings and aromatic heterocycles into a ligand of a mononuclear metal complex is effective to improve catalyst activity and stability, and have made earnest studies based on these findings to complete the present invention.

The mononuclear metal complex used in the second embodiment of the present invention contains, as a ligand, an organic compound having two or more phenol rings (namely, phenols and/or their derivatives) and three or more aromatic heterocycles.

The number of the phenol rings is preferably 2 to 4 and more preferably 2 to 3. Also, because it is desirable to contain aromatic heterocycles which can trap a reaction intermediate or integrate mononuclear metal complexes among them besides the aromatic heterocycles coordinated with the transition metal atom, the number of the aromatic heterocycle is preferably 3 or more and 5 or less.

Then, metal complexes represented by the above formula (XI) are desirable as the mononuclear metal complex. This metal complex is a compound in which a transition metal atom M forms a complex together with a ligand having at least two oxygen atoms. Also, the bond between an oxygen atom and a metal atom is a coordination bond or ionic bond. The term "transition metal" as used herein has the same meaning as that of a "transition element" described in page 1283 of "Chemistry Unabridged Dictionary" (edited by Michinori Ohki et al. and issued by Tokyo Kagaku Dojin on July 1, 2005), and refers to an element having an incomplete d or f electron subshell (which is not completely fulfillled by electrons). It should be noted that the transition metal atom in the present invention may be free of charge, or may be a charged ion.

Here, specific examples of the transition metal include scandium, titanium, vanadium, chromium, manganese, iron, cobalt, nickel, copper, zinc, yttrium, zirconium, niobium, molybdenum, ruthenium, rhodium, palladium, silver, cadmium, hafnium, tantalum, tungsten, rhenium, osmium, iridium, platinum, gold, and mercury.

Among these metals, titanium, vanadium, chromium, manganese, iron, cobalt, nickel, copper, zinc, zirconium, molybdenum, ruthenium, rhodium, palladium, silver, cadmium, tantalum, tungsten, osmium, iridium, platinum, gold and mercury are preferable. Vanadium, chromium, manganese, iron, cobalt, nickel and copper are more preferable and manganese, iron, cobalt, nickel and copper are even more preferable.

Examples of the substituent represented by $R^{11}$ in the formula (XI) include a hydroxyl group, an amino group, a nitro group, a cyano group, a carboxyl group, a formyl group, a sulfonyl group, a halogen atom, a monovalent hydrocarbon group which may be substituted, a hydrocarbyloxy group which may be substituted (hydrocarbon oxy group which may be substituted), an amino group substituted with two monovalent hydrocarbon groups which may be unsubstituted or substituted (namely, hydrocarbon disubstituted amino group which may be substituted), a hydrocarbylmercapto group which may be substituted (hydrocarbon mercapto group which may be substituted), a hydrocarbylcarbonyl group which may be substituted (hydrocarbon carbonyl group which may be substituted), a hydrocarbyloxycarbonyl group which may be substituted (hydrocarbon oxycarbonyl group which may be substituted), an aminocarbonyl group substituted with two monovalent hydrocarbon groups which may be unsubstituted or substituted (namely, hydrocarbon disubstituted aminocarbonyl group which may be substituted) and a hydrocarbyloxysulfonyl group which may be substituted (hydrocarbon sulfonyl group which may be substituted). Among these groups, a monovalent hydrocarbon group which may be substituted, a hydrocarbyloxy group which may be substituted, an amino group substituted with two monovalent hydrocarbon groups which may be unsubstituted or substituted, a hydrocarbylmercapto group which may be substituted, a hydrocarbylcarbonyl group which may be substituted and a hydrocarbyloxycarbonyl group which may be substituted are preferable, a monovalent hydrocarbon group which may be substituted, a hydrocarbyloxy group which may be substituted and an amino group substituted with two monovalent hydrocarbon groups which may be unsubstituted or

substituted are more preferable, and a monovalent hydrocarbon group which may be substituted and a hydrocarbyloxy group which may be substituted are even more preferable. In these groups, a nitrogen atom to which a hydrogen atom is bonded is preferably substituted with a monovalent hydrocarbon group. Further, when the group represented by $R^{11}$ has more than one substituents, two substituents may be combined to form a ring.

Examples of the monovalent hydrocarbon group represented by the above $R^{11}$ include alkyl groups having 1 to 50 carbon atoms (preferably, alkyl groups having 1 to 20 carbon atoms) such as a methyl group, an ethyl group, a propyl group, an isopropyl group, a butyl group, an isobutyl group, a sec-butyl group, a tert-butyl group, a pentyl group, a hexyl group, a nonyl group, a dodecyl group, a pentadecyl group, an octadecyl group and a docosyl group; cyclic saturated hydrocarbon groups having 3 to 50 carbon atoms (preferably, cyclic saturated hydrocarbon groups having 3 to 20 carbon atoms) such as a cyclopropyl group, a cyclobutyl group, a cyclopentyl group, a cyclohexyl group, a cyclononyl group, a cyclododecyl group, a norbornyl group and an adamantyl group; alkenyl groups having 2 to 50 carbon atoms (preferably, alkenyl groups having 2 to 20 carbon atoms) such as an ethenyl group, a propenyl group, a 3-butenyl group, a 2-butenyl group, a 2-pentenyl group, a 2-hexenyl group, a 2-nonenyl group and a 2-dodecenyl group; aryl groups having 6 to 50 carbon atoms (preferably, aryl groups having 6 to 20 carbon atoms) such as a phenyl group, a 1-naphthyl group, a 2-naphthyl group, a 2-methylphenyl group, a 3-methylphenyl group, a 4-methylphenyl group, a 4-methylphenyl group, a 4-propylphenyl group, a 4-isopropylphenyl group, a 4-butylphenyl group, a 4-tert-butylphenyl group, a 4-hexylphenyl group, a 4-cyclohexylphenyl group, a 4-adamantylphenyl group and a 4-phenylphenyl group; and aralkyl groups having 7 to 50 carbon atoms (preferably, aralkyl groups having 7 to 20 carbon atoms) such as a phenylmethyl group, a 1-phenylethyl group, a 2-phenylethyl group, a 1-phenyl-1-propyl group, a 1-phenyl-2-propyl group, a 2-phenyl-2-propyl group, a 3-phenyl-1-propyl group, a 4-phenyl-1-butyl group, a 5-phenyl-1-pentyl group and a 6-phenyl-1-hexyl group.

As the monovalent hydrocarbon group represented by $R^{11}$, hydrocarbon groups having 1 to 20 carbon atoms are preferable, hydrocarbon groups having 1 to 12 carbon atoms are more preferable, hydrocarbon groups having 2 to 12 carbon atoms are even more preferable, hydrocarbon groups having 1 to 10 carbon atoms are even more preferable, hydrocarbon groups having 3 to 10 carbon atoms are even more preferable, alkyl groups having 1 to 10 carbon atoms are even more preferable and alkyl groups having 3 to 10 carbon atoms are further more preferable.

The hydrocarbyloxy group, hydrocarbylmercapto group, hydrocarbylcarbonyl group, hydrocarbyloxycarbonyl group and hydrocarbylsulfonyl group respectively represented by $R^{11}$ are groups obtained by bonding one of the aforementioned monovalent hydrocarbon groups to an oxy group, mercapto group, carbonyl group, oxycarbonyl group and sulfonyl group respectively.

The "amino group substituted with two monovalent hydrocarbon groups which may be unsubstituted or substituted" and "aminocarbonyl group substituted with two monovalent hydrocarbon groups which may be unsubstituted or substituted" represented by $R^{11}$ are groups in which two hydrogen atoms in an amino group and aminocarbonyl group (namely, $-C(=O)-NH_2$) are respectively substituted with the aforementioned monovalent hydrocarbon groups. Specific examples and preferable examples of monovalent hydrocarbon group contained therein are the same as the monovalent hydrocarbon groups represented by $R^1$.

In the monovalent hydrocarbon group, hydrocarbyloxy group, hydrocarbylmercapto group, hydrocarbylcarbonyl group, hydrocarbyloxycarbonyl group and hydrocarbylsulfonyl group represented by $R^{11}$, a part or all of the hydrogen atoms contained in these groups may be substituted with, for example, a halogen atom, a hydroxyl group, an amino group, a nitro group, a cyano group, a monovalent hydrocarbon group which may be substituted, a hydrocarbyloxy group which may be substituted, a hydrocarbylmercapto group which may be substituted, a hydrocarbylcarbonyl group which may be substituted, a hydrocarbyloxycarbonyl group which may be substituted and a hydrocarbyksulfonyl group which may be substituted.

Among the above $R^{11}$, at least one group selected from the group consisting of a hydrogen atom, a methyl group, an ethyl group, a propyl group, an isopropyl group, a n-butyl group, an isobutyl group, a tert-butyl group, a phenyl group, a methylphenyl group, a naphthyl group and a pyridyl group is particularly preferable.

Specific examples of $Q^{11}$ in the formula (XI) include a pyridylene group, a pyrazilene group, a pyrimidylene group, a pyridazilene group, a pyrolylene group, a furylene group, a thienylene group, a thiazolylene group, an imidazolylene group, an oxazolylene group, a triazolylene group, an indolylene group, a benzoimidazolylene group, a benzofurylene group, a benzothienylene group, a quinolylene group, an isoquinolylene group, a cinnolilene group, a phthalazilene group, a quinazolilene group, a quinoxalilene group, a benzodiazilene group, a 1,10-phenanethrolyene group, a 2,2'-bipyridylene group, a 2,2'-bithiophenylene group, a 2,2'-bipyrrolene group, a 2,2'-bithiazolylene group, a 2,2'-bifurylene group, a 2,2'-bipyrimidylene group, a 2,2'-bipyridazilene group and a 2,2'-biimidazolylene group. Among them, a pyridylene group, a pyrazilene group, a pyrimidylene group, a pyridazilene group, a pyrolylene group, a furylene group, a thienylene group, a 1,10-phenanethrolyene group, a 2,2'-bipyridylene group, a 2,2'-bithiophenylene group, a 2,2'-bipyrrolene group, a 2,2'-bithiazolylene group, a 2,2'-bifurylene group, a 2,2'-bipyrimidylene group, a 2,2'-bipyridazilene group and 2,2'-biimidazolylene group are preferable, and more preferably a 1,10-phenanethrolyene group, a 2,2'-bipyridylene group, a 2,2'-bipyrrolene group, a 2,2'-bithiazolylene group and a 2,2'-biimidazolylene group. Also, these groups may be further substituted with substituents given as examples in the paragraph of the above $R^{11}$.

Specific examples of the monovalent organic group having an aromatic heterocycle represented by $T^{11}$ in the formula (XI) may include a pyridyl group, pyrazil group, pyrimidyl group, pyridazyl group, pyrrolyl group, furyl group, thienyl group, thiazolyl group, imidazolyl group, oxazolyl group, triazolyl group, indolyl group, benzoimidazolyl group, benzofuryl group, benzothienyl group, quinolyl group, isoquinolyl group, cinnolyl group, phthalazyl group, quinazolyl group, quinoxalyl group and benzodiazepinyl group. Also, these groups may be further substituted with the above substituent represented by $R^{11}$.

As the aromatic heterocyclic group constituting $T^{11}$ in the formula (XI), aromatic heterocycles of which the conjugate acid has an acid dissociation constant (pKa) of -2.0 or more are preferable. Specific examples of the monovalent organic group $T_1$ having an aromatic heterocycle include a pyridyl group (pyridine, pKa 5.23), pyrazyl group (pyrazine, pKa 1.00), pyridazyl (pyridazine, pKa 2.34), pyrrolyl group (pyrrole, pKa -0.27, 17.00), imidazolyl group (imidazole, pKa 7.18, 14.10), oxazolyl group (oxazole, pKa 0.80), triazolyl group (1H-1,2,4-triazole, pKa 3.00, 10.18, 1H-1,2,4-triazole, pKa 1.47, 8.73), indolyl group (indole, pKa -0.27, 17.00), benzoimidazolyl group (benzoimidazole, pKa 5.67, 12.60), quinolyl group (quinoline, pKa 4.97), isoquinolyl group (isoquinoline, pKa 5.37), cinnolyl group (cinnoline, pKa 3.00), phthalazyl group (phthalazine, pKa 3.47), quinazolyl group (quinazoline, pKa 3.43), quinoxalyl group (quinoxaline, pKa 0.59) and benzodiazepinyl group (benzodiazepine, pKa 9.57). Here, the above pKa is a predicted value at 25°C in water which is calculated by Advanced Chemistry Development (ACD/Labs) Software registered in Scifinder. The pKa value is preferably 0 or more and more preferably 2 or more. Also, the pKa value is preferably 20 or less and more preferably 18 or less.

The mononuclear metal complex used as the electrode catalyst for fuel cell of the present invention preferably has the characteristics that when one oxygen molecule is adsorbed to the mononuclear metal complex and the Mulliken charges of two oxygen atoms constituting the one oxygen molecule is calculated by the density functional method, the absolute value of a difference between the Mulliken charges of the two oxygen atoms is 0.020 to 0.062. The Mulliken charge is obtained by structure optimization calculation based on the density functional method. Gaussian 03 is used for the calculation of the Mulliken charge, B3LYP is used as a function and LANL2DZ and 6-31 G(d) are used for a transition metal atom and other atoms respectively as the base function. When stable structures are present, the most stable structure is adopted.
The absolute value of the difference between the Mulliken charges is preferably 0.030 or more, more preferably 0.040 or more and even more preferably 0.050 or more. Also, the absolute value of the difference between the Mulliken charges is preferably 0.060 or less and more preferably 0.058 or less.
Also, the mononuclear metal complex used as the electrode catalyst for fuel cell of the present invention preferably has the characteristics that when one oxygen molecule is adsorbed to the mononuclear metal complex and the Mulliken charges of two oxygen atoms constituting the one oxygen molecule is calculated by the density functional method, the sum of the Mulliken charges of the two oxygen atoms is -0.25 or more. The Mulliken charge is obtained by structure optimization calculation based on the density functional method.
The sum of the Mulliken charges is preferably -0.23 or more, more preferably -0.20 or more and even more preferably -0.17 or more. Also, the sum of the Mulliken charges is preferably 0.00 or less, more preferably -0.05 or less and even more preferably -0.10 or less.

The mononuclear metal complex represented by formula (XI) is preferably a mononuclear metal complex represented by formula (XII).

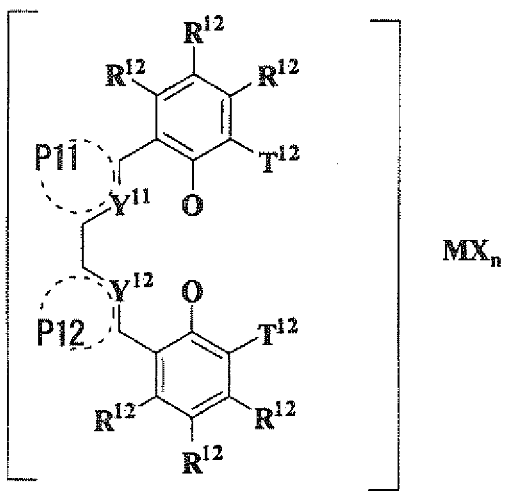

(XII)

In the formula (XII), $R^{12}$ has the same meanings as those of the aforementioned $R^{11}$; neighboring two of $R^{12}$s may be combined to form a ring; $Y^{11}$ and $Y^{12}$ each independently represent any one of the following groups:
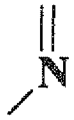 , 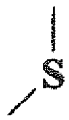 , 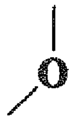 , 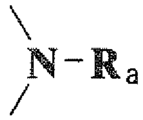

wherein $R_a$ represents a hydrogen atom or hydrocarbon group having 1 to 4 carbon atoms; P11 and P12 represent divalent aromatic heterocyclic groups in combinations with $Y^{11}$ and $Y^{12}$ respectively; P11 and P12 may further be bonded each other, to form a ring; M, X, and n have the same meanings as those of M, X, and n in the formula (XI), respectively; and $T^{12}$ has the same meanings as those as those of the aforementioned $T^{11}$.
Specific examples of P11 and 12 in the formula (XII) include a pyridylene group, a pyrazilene group, a pyrimidylene group, a pyrolylene group, a furylene group, a thienylene group, a thiazolylene group, an imidazolylene group, an oxazolylene group, a triazolylene group, an indolylene group, a benzoimidazolylene group, a benzofurylene group, a benzothienylene group, an isoquinolylene group, a cinnolilene group, a phthalazilene group, a quinazolilene group and a quinoxalilene group. Among them, a pyridylene group, a pyrazilene group, a pyrimidylene group, a pyrolylene group, a furylene group or a thienylene group are preferable; further preferably a pyridylene group, a pyrolylene group, a furylene group or a thienylene group. The above divalent aromatic heterocyclic groups represented by P11 and P12 may be substituted with a substituent represented by $R^{11}$.
Also, P11 and P12 may be combined with each other to newly form a ring, and as the above mononuclear metal complex, those having structures as shown by the following formulae (XIII-a) to (XIII-i) are preferable and those having structures as shown by the following formulae (XIII-a) to (XIII-d) are more preferable.
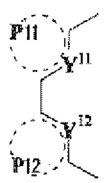

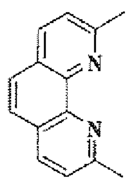
(XIII-a)

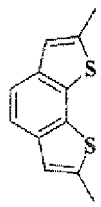
(XIII-b)

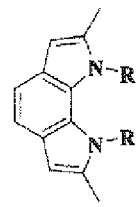
(XIII-c)

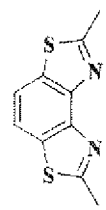
(XIII-d)

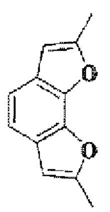
(XIII-e)

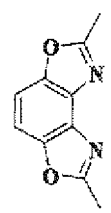
(XIII-f)

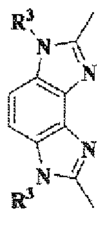
(XIII-g)

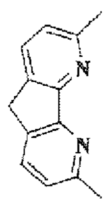
(XIII-h)

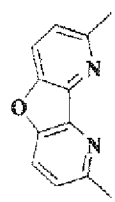
(XIII-i)

Here, $R^{13}$ represents a hydrogen atom or a hydrocarbon group having 1 to 30 carbon atoms.
A part or all of the hydrogen atoms of the divalent aromatic heterocyclic groups represented by P11 and P12 may be substituted with a substituent represented by $R^{11}$ exemplified above.
As described in a nonpatent literature "Tetrahedron., 1999, 55, 8377.", the ligand part of the mononuclear metal complex represented by the formula (XII) can be synthesized by: performing an addition reaction of an organometallic reaction

agent to an heterocycle; oxidizing the resultant; subjecting the resultant to a halogenation reaction; and subjecting the resultant to a cross-coupling reaction with a transition metal catalyst. Also, the ligand part can be synthesized by a stepwise cross-coupling reaction using a halogenated compound having a heterocycle.

As the ligand part of the mononuclear metal complex represented by the above formula (XII), those having structures as shown by the following formulae (XIV-1) to (XIV-18) are preferable. Among these compounds, those having structures as shown by the following formulae (XIV-1) to (XIV-12) are more preferable and those having structures as shown by the following formulae (XIV-1) to (XIV-6) are even more preferable.
In the formulae (XIV-1) to (XIV-18), Me, $^{t}$Bu, and Ph represent methyl, tert-butyl, and phenyl, respectively.

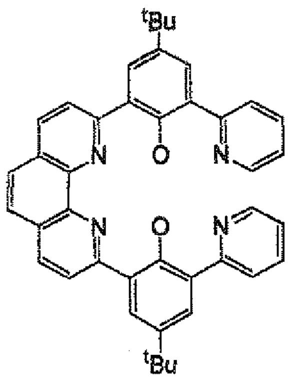
(XIV-1)

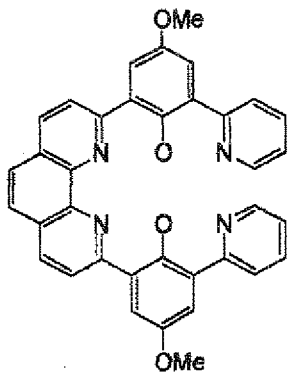
(XIV-2)

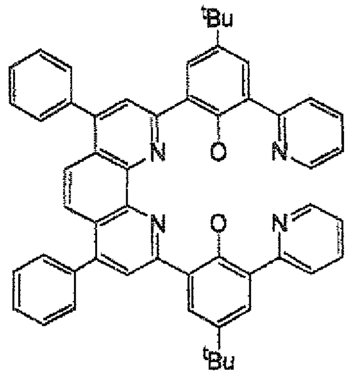
(XIV-3)

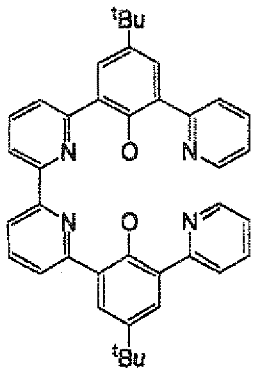
(XIV-4)

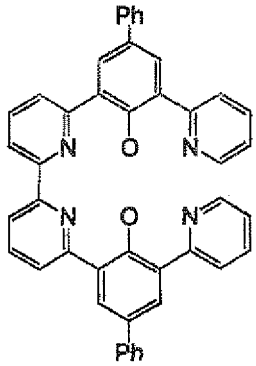
(XIV-5)

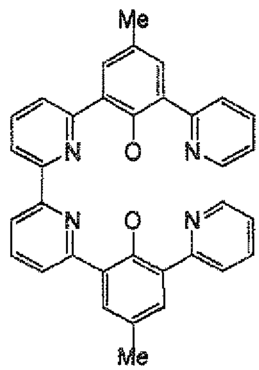
(XIV-6)

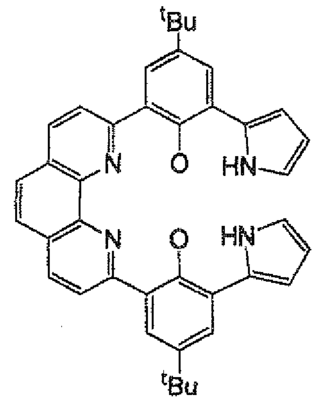
(XIV-7)

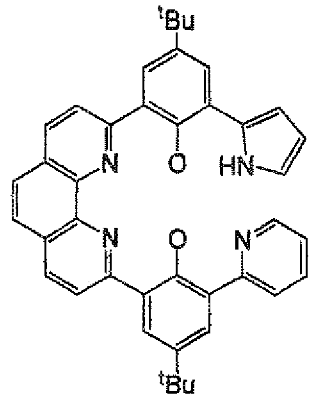
(XIV-8)

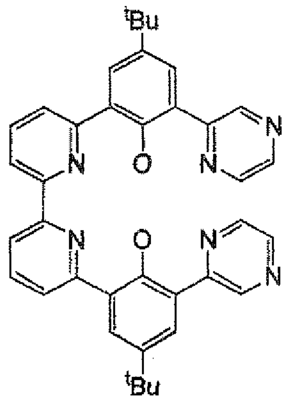
(XIV-9)

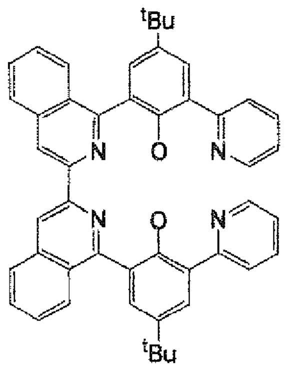
(XIV-10)

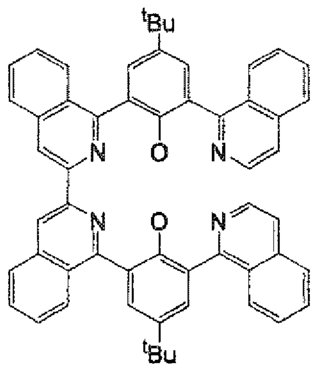
(XIV-11)

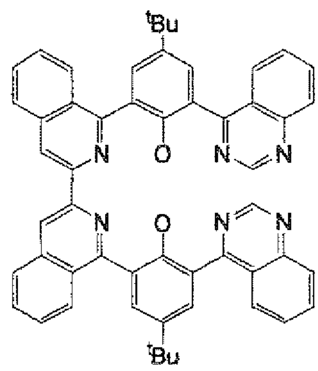
(XIV-12)

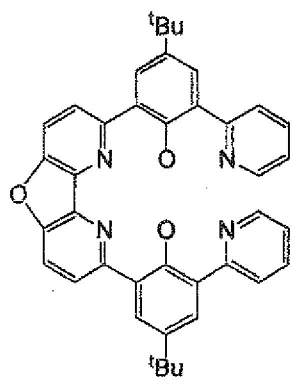
(XIV-13)

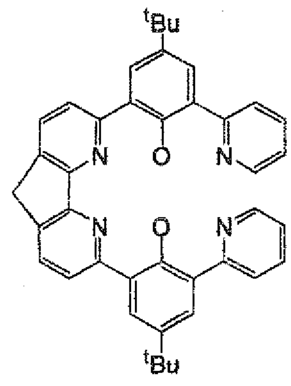
(XIV-14)

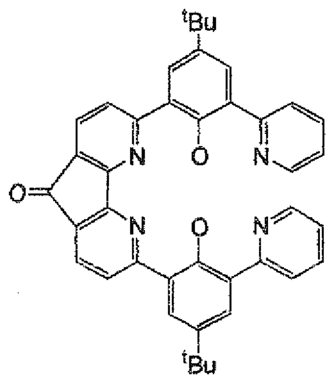
(XIV-15)

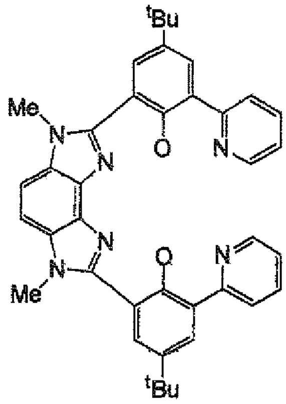

(XIV-16)

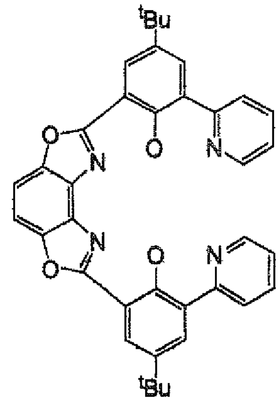

(XIV-17)

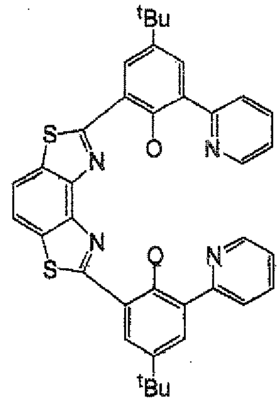

(XIV-18)

X in each of the above formulae (XI) and (XII) represents a neutral molecule or a counter ion that electrically neutralizes the metal complex. Specific examples of the neutral molecule include water, methanol, ethanol, n-propanol, isopropyl alcohol, 2-methoxyethanol, 1,1-dimethyl ethanol, ethylene glycol, N,N'-dimethyl formamide, N,N'-dimethyl acetamide, N-methyl-2-pyrrolidone, dimethyl sulfoxide, acetone, chloroform, acetonitrile, benzonitrile, triethyl amine, pyridine, pyrazine, diazabicyclo[2,2,2]octane, 4,4'-bipyridine, tetrahydrofuran, diethyl ether, dimethoxy ethane, methylethyl ether, and 1,4-dioxane, and preferably water, methanol, ethanol, isopropyl alcohol, ethylene glycol, N,N'-dimethyl formamide, N,N'-dimethyl acetamide, N-methyl-2-pyrrolidone, chloroform, acetonitrile, benzonitrile, triethyl amine, pyridine, pyrazine, diazabicyclo[2,2,2]octane, 4,4'-bipyridine, tetrahydrofuran, dimethoxy ethane, and 1,4-dioxane.

In addition, when X represents a counter ion, because the transition metal atom and a typical metal atom generally have positive charge, a negative ion which neutralize the atom electrically is selected and X represents a fluorine ion, a chlorine ion, a bromine ion, an iodine ion, a sulfide ion, an oxide ion, a hydroxide ion, a hydride ion, a sulfite ion, a phosphate ion, a cyanide ion, an acetate ion, a carbonate ion, a sulfate ion, a nitrate ion, a hydrogencarbonate ion, a trifluoroacetate ion, a thiocyanide ion, a trifluoromethane sulfonate ion, an acetyl acetenate, a tetrafuloroborate ion, a hexafluorophosphate ion, and a tetraphenyl borate ion, and preferably a chloride ion, a bromide ion, an iodide ion, an oxide ion, a hydroxide ion, a hydride ion, a phosphate ion, a cyanide ion, an acetate ion, a carbonate ion, a sulfate ion, a nitrite ion, an acetyl acetenate, and a tetraphenyl borate ion.

In addition, when X's are present, the X's may be the same or different from each other, or a neutral molecule and a counter ion may be coexistent with each other.

Next, a method of synthesizing the mononuclear metal complex used in the second embodiment of the present invention will be explained. The metal complex is obtained by mixing a reaction agent which imparts a metal atom with which the ligand is coordinated (hereinafter referred to as "metal-donating agent"). As the metal-donating agent, an acetate, chloride, sulfate or carbonate of the exemplified transition metals and the like may be used.

As described above, the mononuclear metal complex used in the second embodiment of the present invention can be prepared by mixing the ligand compound and the metal-donating agent in the presence of a proper reaction solvent. Specific examples of the reaction solvent include water, acetic acid, oxalic acid, ammonia water, methanol, ethanol, n-propanol, isopropyl alcohol, 2-methoxyethanol, 1-butanol, 1,1-dimethylethanol, ethylene glycol, diethyl ether, 1,2-dimethoxyethane, methylethyl ether, 1,4-dioxane, tetrahydrofuran, benzene, toluene, xylene, mesitylene, durene, decalin, dichloromethane, chloroform, carbon tetrachloride, chlorobenzene, 1,2-dichlorobenzene, N,N'-dimethylformamide, N,N'-dimethyl acetamide, N-methyl-2-pyrrolidone, dimethylsulfoxide, acetone, acetonitrile, benzonitrile, triethylamine, pyridine, and the like. A reaction solvent obtained by mixing at least two kinds of them may be used and a solvent which can dissolve a ligand compound and a metal-donating agent is preferred. The reaction can be performed at a temperature of generally -10 to 200°C, preferably 0 to 150°C, or particularly preferably 0 to 100°C for a time period of generally 1 minute to 1 week, preferably 5 minutes to 24 hours, or particularly preferably 1 hour to 12 hours. It should be noted that the reaction temperature and the reaction time can also be appropriately optimized depending on the kinds of the ligand compound and the metal-donating agent.

An optimum method selected from a known recrystallization method, a known reprecipitation method, and a known chromatography method can be appropriately employed as a method involving isolating the produced mononuclear metal complex from the reaction solution after the reaction and purifying the Mononuclear metal complex, and two or more of these methods may be employed in combination.

It should be noted that the produced mononuclear metal complex may deposit depending on the reaction solvent; the

deposited mononuclear metal complex can be isolated and purified by separating the mononuclear metal complex by a solid-liquid separation method such as filtration and subjecting the separated product to a washing operation and a drying operation as required.

When the catalyst according to the present invention is prepared, the above mononuclear metal complex is preferably heat-treated. This heat-treatment produces such an effect that it hastens the cleavage of a carbon-hydrogen bond in the mononuclear metal complex to promote the formation of a carbon-carbon bond within the mononuclear metal complex or between the neighboring mononuclear metal complexes, thereby not only improving the stability of the catalyst but also imparting conductivity to the catalyst.

As to the atmosphere used in the heat-treatment of the mononuclear metal complex, the mononuclear metal complex is preferably heat-treated in a reducing atmosphere such as hydrogen or carbon monoxide, an oxidizing atmosphere such as oxygen, carbon gas or water vapor, an inert gas atmosphere such as nitrogen, helium, neon, argon, krypton or xenon, or in the presence of gas or vapor of a nitrogen-containing compound such as ammonia and acetonitrile or of a mixture of these gases. More preferably, the reducing atmosphere is a hydrogen atmosphere or a mixture gas atmosphere containing hydrogen and the above inert gas, the oxidizing atmosphere is an oxygen atmosphere or a mixture gas atmosphere containing oxygen and the above inert gas and the inert gas atmosphere is a nitrogen, neon or argon atmosphere or a mixture gas atmosphere containing these gases.

Also, the pressure in relation to the heat treatment is, though not particularly limited to, preferably in the vicinity of normal pressure, that is, about 0.5 to 1.5 atmospheres.

The temperature for the heating treatment of the mononuclear metal complex is preferably 250°C or higher, more preferably 300°C or higher, furthermore preferably 400°C or higher, and even more preferably 500°C or higher. Further, it is preferably 1,500°C or lower, more preferably 1,200 °C or lower, and even more preferably 1,000°C or lower.

The treatment time for the heating treatment may be set properly depending on the above-mentioned gas to be used, temperature, and the like and in the state that the above-mentioned gas is tightly closed or ventilated, the temperature is gradually increased from room temperature to an aimed temperature and thereafter, it may be decreased immediately. Particularly, it is preferable to keep the temperature after the temperature reaches the aimed temperature since the mononuclear metal complex can be gradually modified and the durability can be improved more. The retention time after the temperature reaching the aimed temperature is preferably 1 to 100 hours, more preferably 1 to 40 hours, furthermore preferably 2 to 10 hours, and even more preferably 2 to 3 hours.

An apparatus for the heating treatment is not either particularly limited and a tubular furnace, an oven, a furnace, an IH hot plate, and the like can be exemplified.

In another embodiment of the electrode catalyst for fuel cell of the present invention, the electrode catalyst for fuel cell may be constituted of a mononuclear metal complex mixture containing the above mononuclear metal complex, a carbon support and/or a conductive polymer.

In the mononuclear metal complex mixture, the ratio of the mononuclear metal complex, carbon support and conductive polymer to be mixed is preferably designed such that the content of the mononuclear metal complex is 1 to 70% by mass based on the total mass of the mononuclear metal complex, carbon support and conductive polymer. The content of the base metal complex is preferably 2 to 60% by mass and more preferably 3 to 50% by mass.

Examples of the carbon carrier include carbon particles such as Norit (trade name: manufactured by Norit corporate), Ketjen black (trade name: manufactured by Lion Corporation), Vulcan (trade name: manufactured by Cabot Corporation), black pearl (trade name: manufactured by Cabot Corporation), acetylene black (trade name: manufactured by Chevron Corporation); fullerene such as C60 and C70; carbon nanotubes, carbon nanohorns, carbon fibers and the like.

Such a mononuclear metal complex mixture may be heat-treated to make an electrode catalyst for fuel cell, and the conditions and the like in the heat treatment are the same as those used when the above mononuclear metal complex is independently heat-treated.

All of the above mononuclear metal complexes have a high level of heat resistance and acid resistance since they have an aromatic structure. Therefore, the mononulear metal complex has a stable complex structure even at high temperatures of operating condition of the fuel cell or in the presence of a strong acid and therefore can exhibit high catalytic performance for a long period of time.

Examples of the conductive polymer are polyacetylene, polyaniline, polypyrrole and the like. The above mononuclear complex, carbon support, conductive polymer may be used either singly or in combinations of two or more.

The electrode catalyst for fuel cell of the present invention may be used as the catalyst of the fuel electrode or air electrode of a fuel cell. In this case, the electrode catalyst for fuel cell may be used as a catalyst for both of the fuel electrode and the air electrode and may also be used as a catalyst for any one of the fuel electrode and the air electrode.

A fuel cell having the electrode catalyst for fuel cell of the present invention may be used, for example, for the power sources of automobiles, power sources for domestic use, and miniature power sources for mobile devices such as portable telephones and portable personal computers.

The first embodiment of the present invention uses a multinuclear complex, ensuring that metal atoms can be

arranged at an interval favorable for an electrode reaction and also uses a ligand having 5 to 15 coordination atoms, making it possible to retain a multinuclear structure after the heat-treatment. Such a multinuclear complex exhibits excellent catalytic activity (for example, mass activity) as an electrode catalyst for fuel cell.
Also, the second embodiment of the present invention uses a mononuclear metal complex, providing an electrode catalyst for fuel cell excellent in catalyst activity (for example, mass activity) and stability.

EXAMPLES

The present invention will be described in more detail based on examples given below, but the invention is not meant to be limited by these. The interatomic distance of the transition metal atoms of the multinuclear complex which is described as the calculated value in Examples is a value calculated by a calculation program Materials Studio DMol$^3$ version 4.2, wherein the GGA/PW91 function and DNP base function were used for the calculation and DFT Semi-local Pseudopotential (DSPP) was used for an inner-shell electron of the transition metal atoms.

Synthesis of Multinuclear Complex

Synthesis Example 1 [Synthesis of Multinuclear Complex (A)]

Multinuclear Complex (A) was synthesized according to the following reaction formula (1) with reference to the method described in Australian Journal of Chemistry, 23, 2225 (1970).
Reaction formula (1)

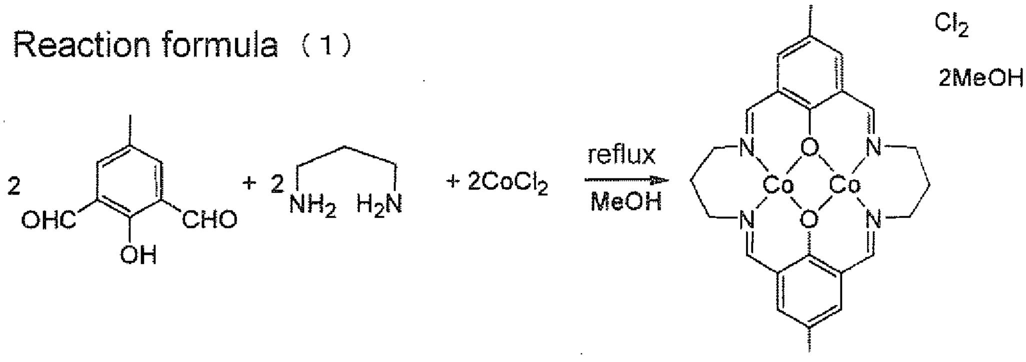


(A)

First, under a nitrogen atmosphere, 1.9 g of cobalt chloride hexahydrate and 50 mL of methanol solution containing 1.31 g of 4-methyl-2,6-diformylphenol were poured into a 100 mL egg plant-shape flask, and the mixture was stirred at room temperature. Solution prepared by dissolving 0.59 g of 1,3-propanediamine in 20 mL of methanol was added gradually to the above obtained solution. The obtained mixture was refluxed for 3 hours to produce a brownish-red precipitate. This precipitate was collected by filtration and dried to obtain Multinuclear Complex (A) (amount: 1.75 g, yield: 74%). With regard to the interatomic distance between the transition metal atoms in Multinuclear Complex (A), at least one of the distances was 3.137 Å as described in Inorganica Chimica Acta, 16, 121 (1976). In the above reaction formula, "$Cl_2$" shows that two equivalents of a chloride ion exists as a counter ion, "2MeOH" shows that two equivalents of a methanol molecule exists as a ligand other than the large cyclic ligand.
Elementary Analysis Value (%):
Calculated Value (Calcd for $C_{26}H_{34}Cl_2Co_2N_4O_4$): C, 47.65; H, 5.23; N, 8.55
Actual Measurement Value: C, 46.64; H, 5.02; N, 8.58

Synthesis Example 2 [Synthesis of Multinuclear Complex (B)]

Multinuclear Complex (B) was synthesized by the method described below according to the following reaction formula (2).
Reaction formula (2)

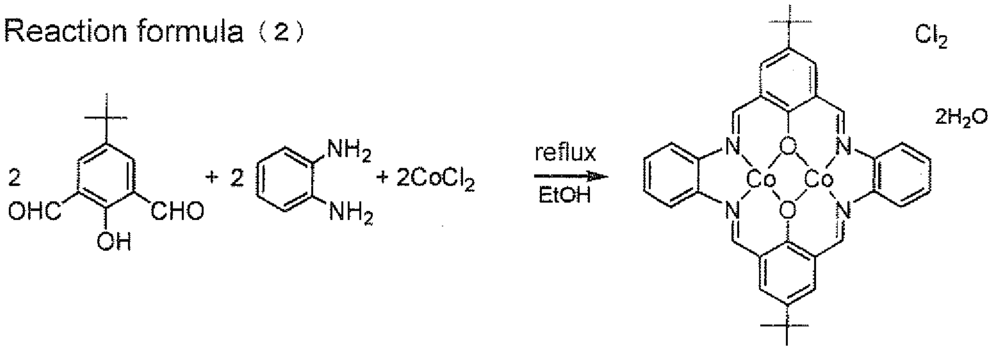


(B)

Under a nitrogen atmosphere, 0.476 g of cobalt chloride hexahydrate and 10 mL of methanol solution containing 0.412 g of 4-tert-butyl-2,6-diformylphenol were poured into a 50 mL egg plant-shape flask, and the mixture was stirred at room temperature. Solution prepared by dissolving 0.216 g of o-phenylenediamine in 5 mL of ethanol was added gradually to the above obtained solution. The obtained mixture was refluxed for 2 hours to produce a brownish-red precipitate. This precipitate was collected by filtration and dried to obtain Multinuclear Complex (B) (amount: 0.465 g, yield: 63%). When the interatomic distance between the transition metal atoms was calculated by the above calculation method, at least one of the distances was 2.882 Å. In the above reaction formula, "$Cl_2$" shows that two equivalents of a chloride ion exists as a counter ion, "$2H_2O$" shows that two equivalents of a water molecule exists as other ligand.
Elementary Analysis Value (%):
Calculated Value (Calcd for $C_{36}H_{38}Cl_2Co_2N_4O_4$): C, 55.47; H, 4.91; N, 7.19
Actual Measurement Value: C, 56.34; H, 4.83; N, 7.23

Synthesis Example 3 [Synthesis of Multinuclear Complex (C)]

Multinuclear Complex (C) was synthesized according to the following reaction formula (3) with reference to the method described in Bulletin of Chemical Society of Japan, 68, 1105 (1995).
Reaction formula (3)

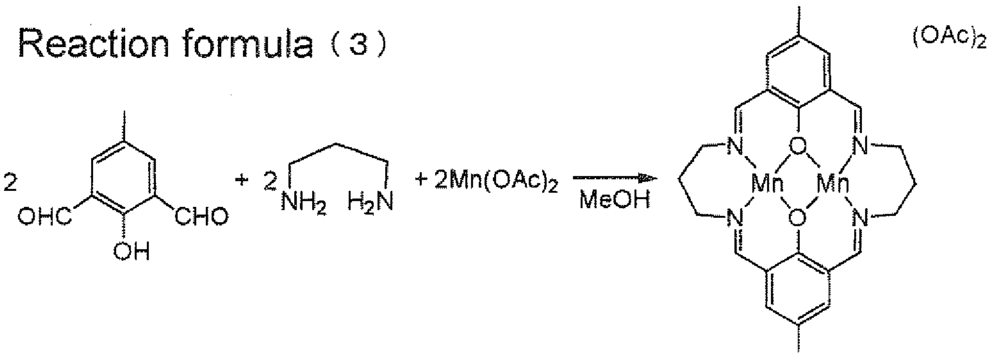


(C)

0.33 g of 4-methyl-2,6-diformylphenol and 10 mL of methanol solution containing 0.49 g of manganese(II) acetate tetrahydrate were poured into a 50 mL egg plant-shape flask, and the mixture was stirred at room temperature. Solution prepared by dissolving 0.15 g of 1,3-propanediamine in 5 mL of methanol was added gradually to the above obtained solution. The obtained mixture was stirred for 1 hour to produce a yellow precipitate. This precipitate was collected by filtration, washed with methanol and dried in a vacuum, to obtain Multinuclear Complex (C) (amount: 0.25 g, yield: 39%). With regard to the interatomic distance between the transition metal atoms in Multinuclear Complex (C), at least one of the distances was 3.367 Å as described in Bulletin of Chemical Society of Japan, 68, 1105 (1995). In the above reaction formula, "$(OAc)_2$" shows that two equivalents of an acetic acid ion exists as a counter ion. Elementary

Analysis Value (%):
Calculated Value (Calcd for $C_{28}H_{32}Mn_2N_4O_6$): C, 53.34; H, 5.12; N, 8.89
Actual Measurement Value: C, 53. 07; H, 5.12; N, 8.72

Synthesis Example 4 [Synthesis of Multinuclear Complex (D)]

Multinuclear Complex (D) was synthesized according to the following reaction formula (4) in accordance with the method described in Australian Journal of Chemistry, 23, 2225 (1970).

Reaction formula (4)

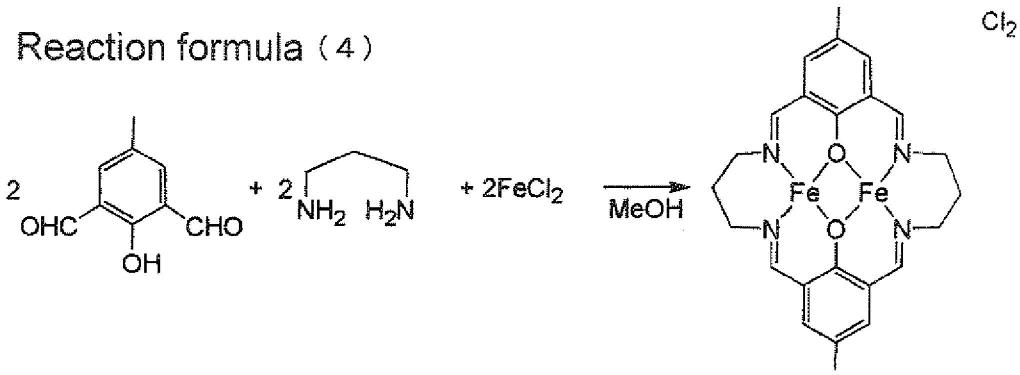


(D)

Under a nitrogen atmosphere, 0.4 g of ferrous chloride tetrahydrate and 20 mL of methanol solution containing 0.33 g of 4-methyl-2,6-diformylphenol were poured into a 50 mL egg plant-shape flask, and the mixture was stirred at room temperature. Solution prepared by dissolving 0.15 g of 1,3-propanediamine in 10 mL of methanol was added gradually to the above obtained solution. The obtained mixture was stirred for 3 hours to produce a reddish-brown precipitate. This precipitate was collected by filtration and dried to obtain Multinuclear Complex (D) (amount: 0.50 g, yield: 85%). With regard to the interatomic distance between the transition metal atoms in Multinuclear Complex (D), at least one of the distances was 3.108 Å as described in Journal of Chemical Crystallography, 34, 83 (2004). In the above reaction formula, "$Cl_2$" shows that two equivalents of a chloride ion exists as a counter ion.
Elementary Analysis Value (%):
Calculated Value (Calcd for $C_{24}H_{26}Cl_2Fe_2N_4O_2$): C, 49.27; H, 4.48; N, 9.58
Actual Measurement Value: C, 44.92; H, 4.94; N, 10.86

Synthesis Example 5 [Synthesis of Multinuclear Complex (E)]

Multinuclear Complex (E) was synthesized according to the following reaction formula (5) in accordance with the method described in Chemische Berichte, 127, 465 (1994).

Reaction formula (5)

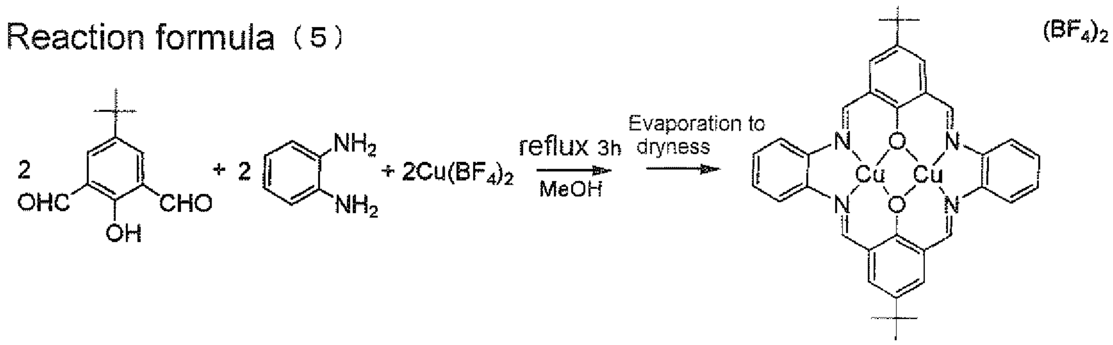


(E)

4 mL of methanol solution containing 0.86 g of 1,2-phenylenediamine was added in a 50 mL egg plant-shape flask containing 10 mL of methanol solution containing 1.9 g of copper (II) tetrafluoroborate with stirring. In succession, 8 mL of methanol containing 1.65 g of 4-t-butyl-2,6-diformylphenol was gradually added to the above solution, and then the mixture was refluxed for 3 hours. The solution was concentrated with an evaporator, and cooled in a refrigerator, to produce a brown precipitate. The obtained precipitate was collected by filtration and dried to obtain Multinuclear Complex (E) (amount: 2.63 g, yield: 55%). With regard to the interatomic distance between the transition metal atoms in Multinuclear Complex (E), at least one of the distances was 2.928 Å as described in Chemische Berichte, 127, 465 (1994). In the above reaction formula, "$(BF_4)_2$" shows that two equivalents of a tetrafluoroborate ion exists as a counter ion. Elementary Analysis Value (%):
Calculated Value (Calcd for $C_{55}H_{60}Cu_2N_6O_6B_2F_8$): C, 50.55; H, 4.01; N, 6.55
Actual Measurement Value: C, 51.64; H, 4.53; N, 6.83

Synthesis Example 6 [Synthesis of Multinuclear Complex (F)]

Multinuclear Complex (F) was synthesized according to the following reaction formula (6) with reference to the method described in Journal of Chemical Society, Dalton Transactions, 1223 (1996).
Reaction formula (6)

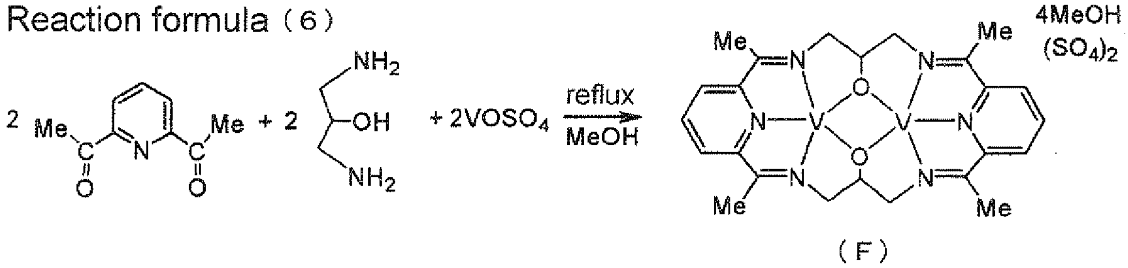


Under a nitrogen atmosphere, 1.63 g of vanadium oxysulfate hydrate and 30 mL of methanol solution containing 1.68 g of 2,6-diacetylpyridine were poured into a 100 mL egg plant-shape flask, and the mixture was heated to 80°C with stirring. Solution prepared by dissolving 0.90 g of 1,3-diaminopropane in 20 mL of methanol was added gradually to the above obtained solution over 30 minutes. The above mixture solution was refluxed for 8 hours to produce a deep bluish-purple precipitate. This precipitate was collected by filtration and dried to obtain Multinuclear Complex (F) (amount: 3.1 g, yield: 45%). With regard to the interatomic distance between the transition metal atoms in Multinuclear Complex (F), at least one of the distances was 3.275 Å as described in Journal of Chemical Society, Chemical Communications, 64 (1990). In the above reaction formula, "$(SO_4)_2$" shows that two equivalents of a sulfuric acid ion exists as a counter ion, "4MeOH" shows that four equivalents of a methanol molecule exists as other ligand.
Elementary Analysis Value (%):
Calculated Value (Calcd for $C_{28}H_{44}V_2N_6O_{14}S_2$); C, 39.35; H, 5.19; N, 9.83
Actual Measurement Value: C, 39.73; H, 5.44; N, 10.42

Synthesis Example 7 [Synthesis of Multinuclear Complex (G)]

Multinuclear Complex (G) was synthesized according to the following reaction formula (7).
Reaction formula (7)

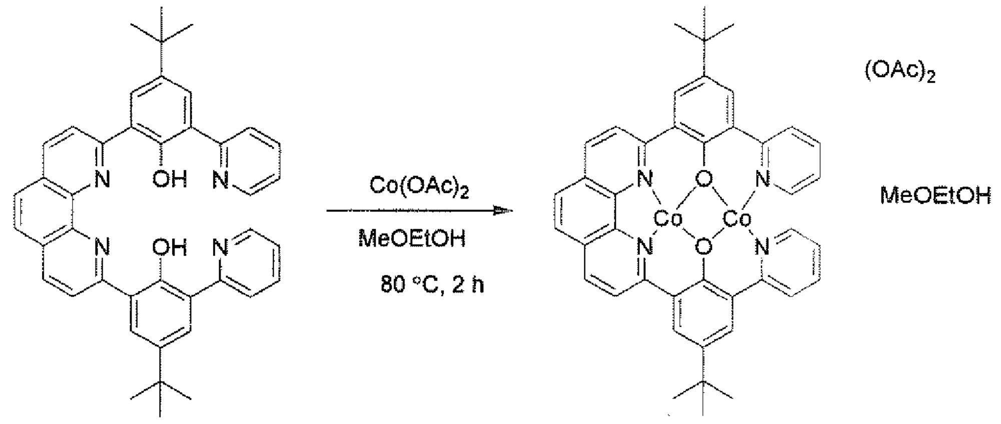


(G)

The above ligand which was the raw material of the complex was synthesized by the method described in Tetrahedron, 55, 8377 (1999). Under a nitrogen atmosphere, 1.388 g of the ligand and 200 mL of 2-methoxyethanol solution containing 1.245 g of cobalt acetate tetrahydrate were poured into a 500 mL egg plant-shape flask, and the mixture was stirred under heating at 80°C for 2 hours to produce a brown solid. The solid was taken by filtration, and was then washed with 20 mL of 2-methoxyethanol and dried, whereby Multinuclear Complex (G) was obtained (amount: 1.532 g, yield: 74%). When the interatomic distance between the transition metal atoms was calculated by the above calculation method, at least one of the distances was 2.822 Å. In the above reaction formula, "$(OAc)_2$" shows that two equivalents of an acetic acid ion exists as a counter ion, "MeOEtOH" shows that one equivalent of a 2-methoxyethanol is contained.

Elementary Analysis Value (%):

Calculated Value (Calcd for $C_{49}H_{50}Co_2N_4O_8$): C, 62.56; H, 5.36; N, 5.96; Co, 12.53

Actual Measurement Value: C, 62.12; H, 5.07; N, 6.03; Co, 12.74

Synthesis Example 8 [Synthesis of Multinuclear Complex (H)]

Multinuclear Complex (H) was synthesized according to the following reaction formula (8).

Reaction formula (8)

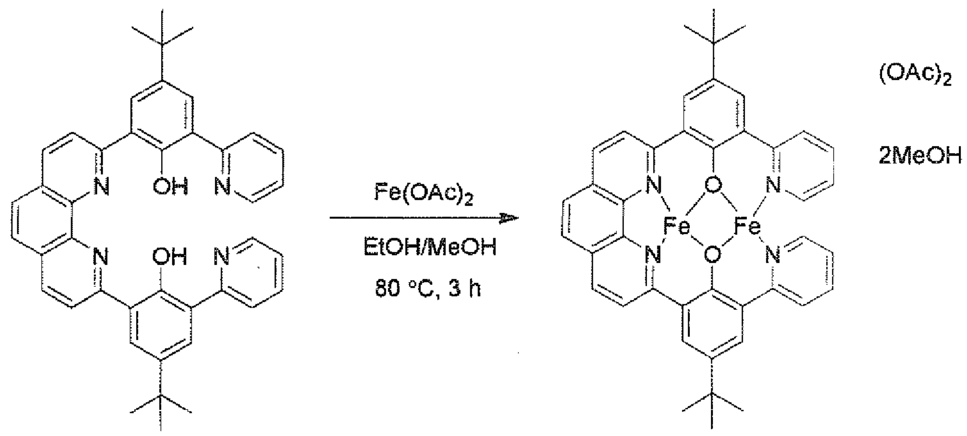


(H)

The ligand synthesized in Synthetic Example 7 was used as the above ligand which was the raw material of the complex. Under a nitrogen atmosphere, 10 mL of ethanol solution containing 0.126 g of the ligand and 5 mL of

methanol solution containing 0.078 g of iron acetate were poured into a 50 mL egg plant-shape flask, and the mixture was stirred under heating at 80°C for 3 hours to precipitate a brown solid. The solid was taken by filtration, and was then washed with methanol and dried, whereby Multinuclear Complex (H) was obtained (amount: 0.075 g, yield: 41%). When the interatomic distance between the transition metal atoms was calculated by the above calculation method, at least one of the distances was 2.824 Å. In the above reaction formula, "$(OAc)_2$" shows that two equivalents of an acetic acid ion exists as a counter ion, "MeOH" shows that two equivalents of a methanol molecule is contained.
Elementary Analysis Value (%):
Calculated Value (Calcd for $C_{48}H_{50}Fe_2N_4O_8$): C, 62.49; H, 5.46; N, 6.07
Actual Measurement Value: C, 59.93; H, 5.29; N, 5.70

Synthesis Example 9 [Synthesis of Multinuclear Complex (I)]

Multinuclear Complex (I) was synthesized according to the following reaction formula (9).
Reaction formula (9)

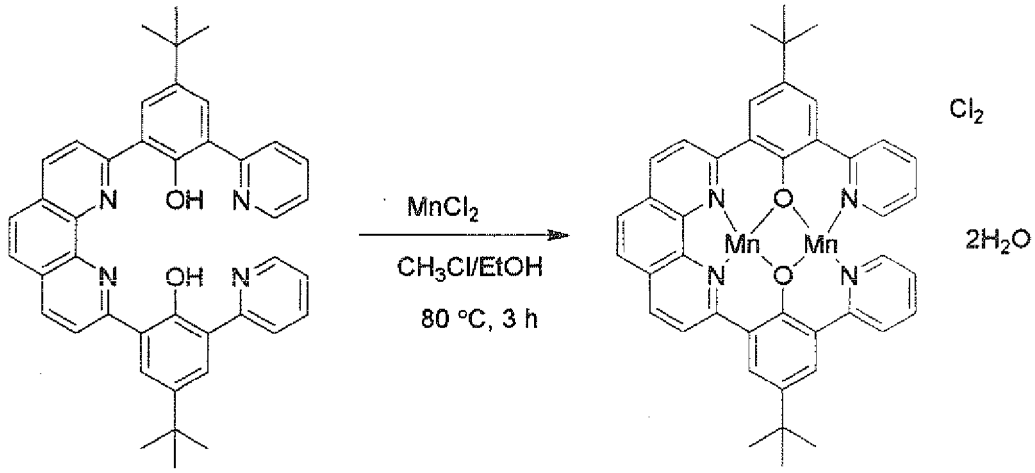


(I)

The ligand synthesized in Synthetic Example 7 was used as the above ligand which was the raw material of the complex. Under a nitrogen atmosphere, 2 mL of chloroform solution containing 0.126 g of the ligand and 6 mL of ethanol solution containing 0.089 g of manganese chloride tetrahydrate were poured into a 25 mL egg plant-shape flask, and the mixture was stirred under heating at 80°C for 3 hours to precipitate a yellow solid. The solid was taken by filtration, and was then washed with chloroform and ethanol, and dried, whereby Multinuclear Complex (I) was obtained (amount: 0.092 g). When the interatomic distance between the transition metal atoms was calculated by the above calculation method, at least one of the distances was 2.672 Å. In the above reaction formula, "$Cl_2$" shows that two equivalents of a chloride ion exists as a counter ion, "$2H_2O$" shows that two equivalents of a water molecule is contained.
Elementary Analysis Value (%):
Calculated Value (Calcd for $C_{42}H_{40}Mn_2N_4O_4$): C, 59.66; H, 4.77; N, 6.63
Actual Measurement Value: C, 58.26; H, 4.58; N, 6.33

Synthesis Example 10 [Synthesis of Multinuclear Complex (J)]

Multinuclear Complex (J) was synthesized according to the following reaction formula.

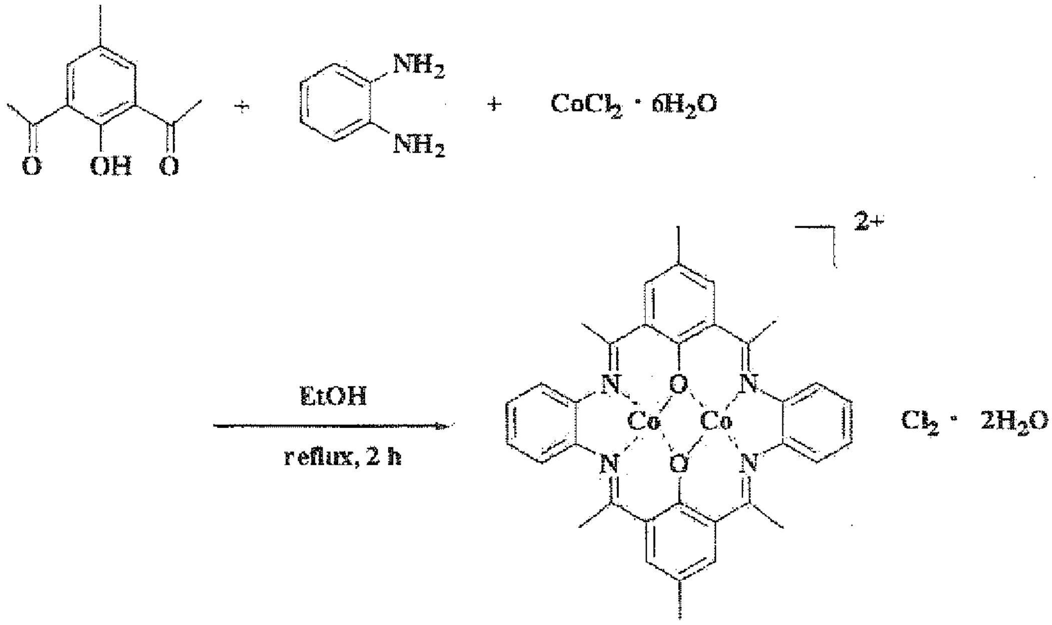


(J)

Under a nitrogen atmosphere, 0.238 g of cobalt chloride hexahydrate and 5 mL of ethanol solution containing 0.192 g of 4-methyl-2,6-diacetylphenol were charged into a 50-mL egg plant flask, and the mixture was stirred at room temperature. Solution of 0.108 g of o-phenylenediamine in 10 mL of ethanol was gradually added to the solution. The above mixture was refluxed for 3 hours, whereby a brownish-red precipitate was produced. The precipitate was taken by filtration, and was then dried, whereby Multinuclear Complex (J) was obtained (amount: 0.129 g, yield: 36%). When the interatomic distance between the transition metal atoms was calculated by the above calculation method, at least one of the distances was 2.849 Å.
Elementary Analysis Value (%):
Calcd for $C_{34}H_{34}Cl_2Co_2N_4O_4$; C, 54.34; H, 4.56; N, 7.46
Found: C, 53.57; H, 4.49; N, 7.00

In the above reaction formula, "$Cl_2$" shows that two equivalents of a chloride ion exists as a counter ion, "$2H_2O$" shows that two equivalents of a water molecule is contained as a component for forming Multinuclear Complex (J).

Synthesis Example 11 [Synthesis of Multinuclear Complex (K)]

Multinuclear Complex (K) was synthesized according to the following reaction formula.

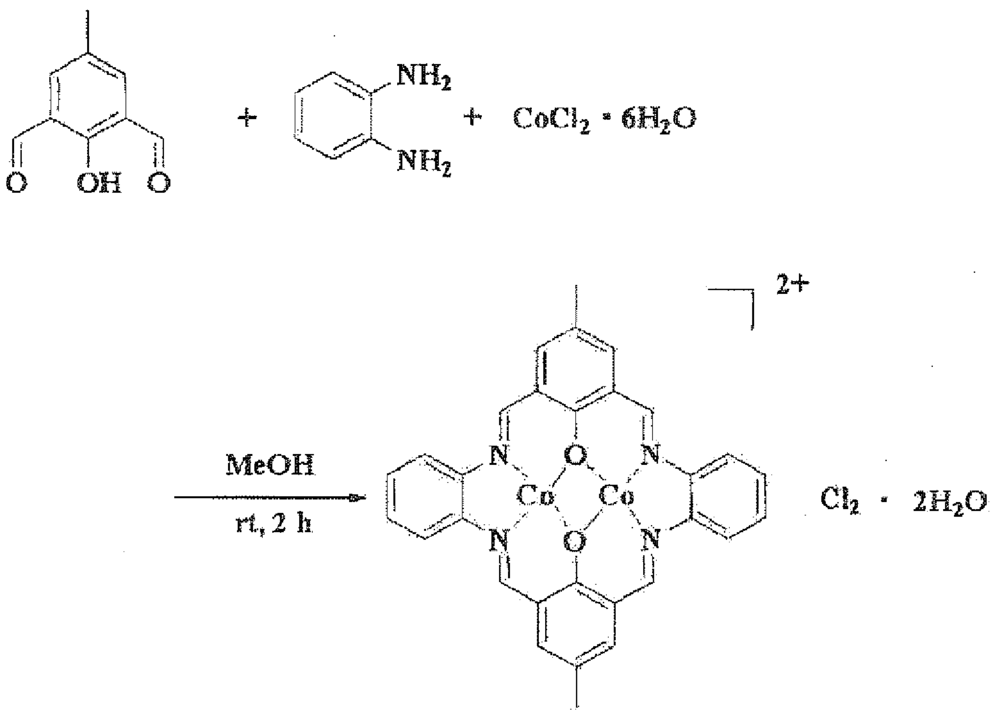


(K)

Under a nitrogen atmosphere, 0.476 g of cobalt chloride hexahydrate and 25 mL of methanol solution containing 0.328 g of 4-methyl-2,6-diformylphenol were charged into a 100-mL egg plant flask, and the mixture was stirred at room temperature. Solution of 0.216 g of o-phenylenediamine in 5 mL of methanol was gradually added to the solution. The above mixture was stirred for 2 hours at room temperature, whereby a brown-black precipitate was produced. The precipitate was taken by filtration, and was then dried, whereby Multinuclear Complex (K) was obtained (amount: 0.368 g, yield: 56%). When the interatomic distance between the transition metal atoms was calculated by the above calculation method, at least one of the distances was 2.892 Å.
Elementary Analysis Value (%):
Calcd for $C_{30}H_{26}Cl_2Co_2N_4O_4$; C, 51.82; H, 3.77; N, 8.06
Found: C, 52.41; H, 3.95; N, 8.20

In the above reaction formula, "$Cl_2$" shows that two equivalents of a chloride ion exists as a counter ion, "$2H_2O$" indicates that two equivalents of a water molecule is contained as a component of multinuclear complex (K).

Synthesis Example 12 [Synthesis of Multinuclear Complex (L)]

Multinuclear Complex (L) was synthesized according to the following reaction formula.

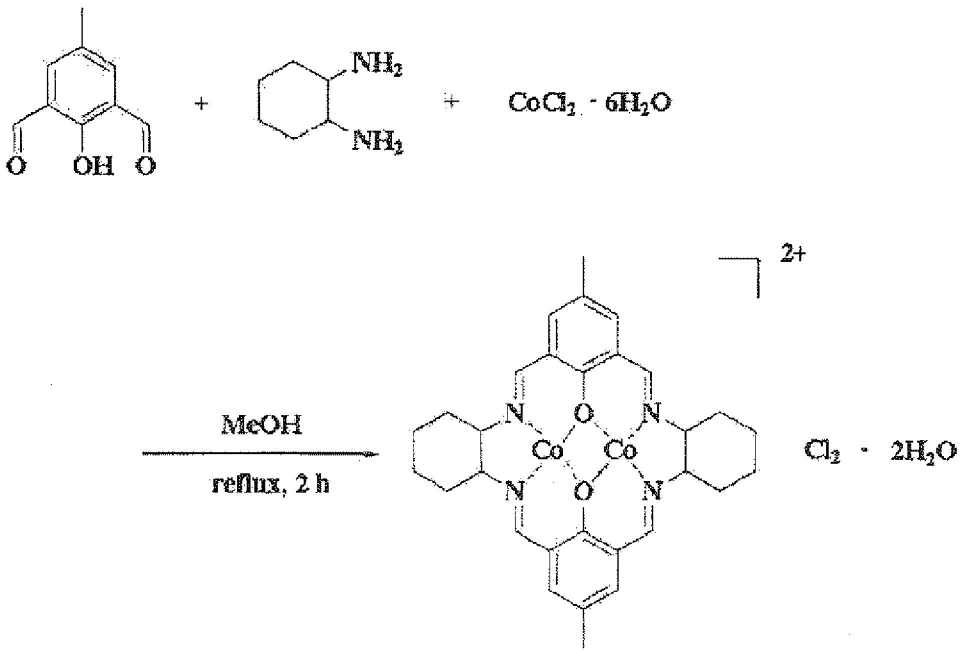


(L)

Under a nitrogen atmosphere, 0.476 g of cobalt chloride hexahydrate and 10 mL of methanol solution containing 0.328 g of 4-methyl-2,6-diformylphenol were charged into a 50-mL egg plant flask, and the mixture was stirred at room temperature. Solution of 0.228 g of trans-1,2-cyclohexanediamine in 5 mL of methanol was gradually added to the solution. The above mixture was refluxed for 2 hours, whereby a brownish-red precipitate was produced. The precipitate was taken by filtration, and was then dried, whereby Multinuclear Complex (M) was obtained (amount: 0.141 g, yield: 21%). When the interatomic distance between the transition metal atoms was calculated by the above calculation method, at least one of the distances was 2.870 Å.

Elementary Analysis Value (%):

Calcd for $C_{30}H_{38}Cl_2Co_2N_4O_4$; C, 50.93; H, 5.41; N, 7.92

Found: C, 49.60; H, 5.47; N, 8.04

In the above reaction formula, "$Cl_2$" shows that two equivalents of a chloride ion exists as a counter ion, "$2H_2O$" shows that two equivalents of a water molecule is contained as a component for forming Multinuclear Complex (L).

Synthesis Example 13 [Synthesis of Multinuclear Complex (M)]

Multinuclear Complex (M) was synthesized according to the following reaction formula.

[Synthesis of Compound (A)]

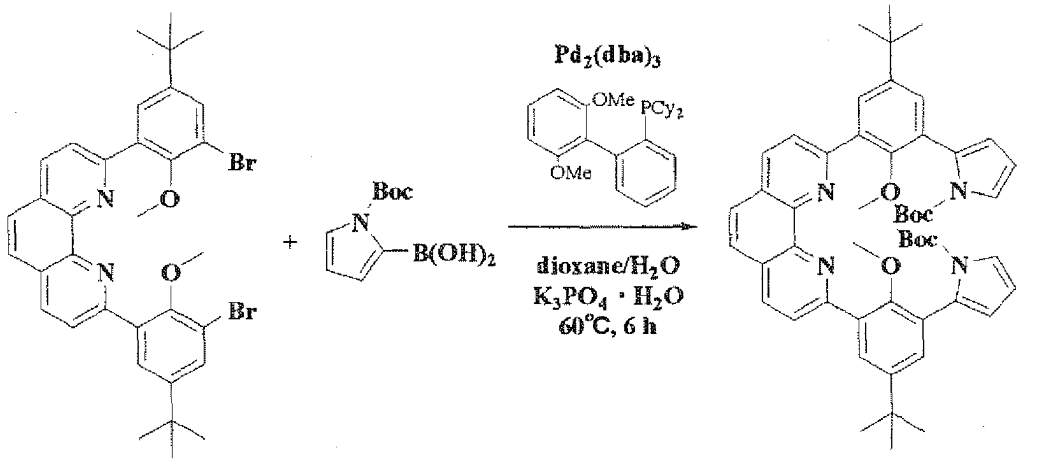


Compound (A)

As a raw material, 2,9-di(3'-bromo-5'-tert-buty!-2'-methoxyphenyl)-1,10-phenanthroline was synthesized by the method described in Tetrahedron., 1999, 55, 8377. Under an argon atmosphere, 3.945 g of 2,9-di(3'-bromo-5'-tert-butyl-2'-methoxyphenyl)-1,10-phenanthroline, 3.165 g of 1-N-Boc-pyrrole-2-boronic acid, 0.138 g of tris(benzylideneacetone)dipalladium, 0.247 g of 2-dicyclohexylphosphino-2',6'-dimethoxybiphenyl, and 5.527 g of potassium phosphate were dissolved in mixed solvent of 200 mL of dioxane and 20 mL of water, and the mixture was stirred at 60°C for 6 hours. After the completion of the reaction, the solution was left standing to cool, distilled water and chloroform were added to the solution, and an organic layer was extracted. The resultant organic layer was concentrated, whereby a black residue was obtained. The residue was purified with a silica gel column, whereby Compound (A) was obtained. $^{1}$H-NMR (300 MHz, $CDCl_3$) δ 1.34 (s, 18H), 1.37 (s, 18H), 3.30 (s, 6H), 6.21 (m, 2H), 6.27 (m, 2H), 7.37 (m, 2H), 7.41 (s, 2H), 7.82 (s, 2H), 8.00 (s, 2H), 8.19 (d, J = 8.6 Hz, 2H), 8.27 (d, J = 8.6 Hz, 2H)

[Synthesis of Compound (B)]

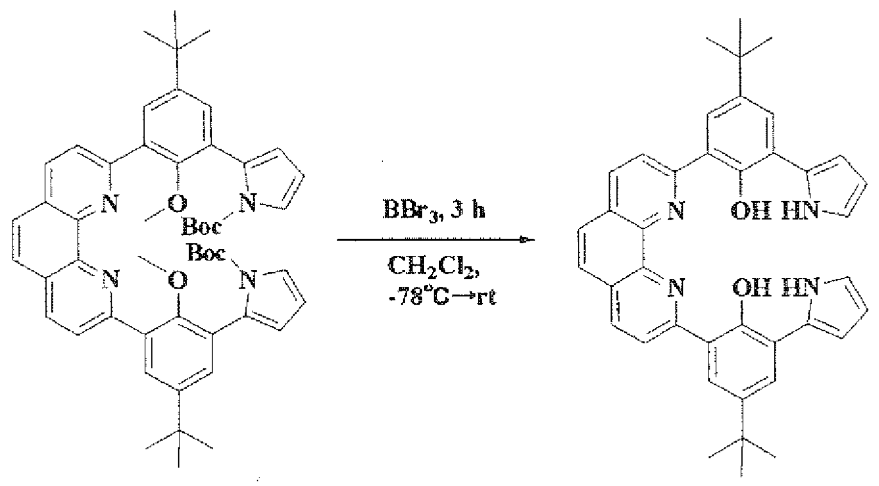


Compound (A) Compound (B)

Under a nitrogen atmosphere, 0.904 g of Compound (A) was dissolved in 10 mL of anhydrous dichloromethane.

While the dichloromethane solution was cooled to -78°C, 8.8 mL of boron tribromide (1.0-M dichloromethane solution) was slowly dropped to the dichloromethane solution. After the dropping, the mixture was stirred without any change for 10 minutes, and was then left to stand while being stirred so that its temperature might reach room temperature. Three (3) hours after that, the reaction solution was cooled to 0°C, and a saturated aqueous solution of $NaHCO_3$ was added to the solution. After that, an organic layer was extracted by adding chloroform to the mixture, and was then concentrated. The obtained brown residue was purified with a silica gel column, whereby Compound (B) was obtained.
$^1$H-NMR (300 MHz, $CDCl_3$) δ 1.40 (s, 18H), 6.25 (m, 2H), 6.44 (m, 2H), 6.74 (m, 2H), 7.84 (s, 2H), 7.89 (s, 2H), 7.92 (s, 2H), 8.35 (d, J = 8.4 Hz, 2H), 8.46 (d, J = 8.4 Hz, 2H), 10.61 (s, 2H), 15.88 (s, 2H).
Two molar equivalents of cobalt acetate was added to the above obtained Compound (B), and the mixture was stirred in methanol, to prepare Multinuclear Complex (M). When the interatomic distance between the transition metal atoms was calculated by the above calculation method, at least one of the distances was 2.881 Å.

Synthesis Example 14 [Synthesis of Multinuclear Complex (N)]

Multinuclear Complex (N) was synthesized according to the following reaction formula.
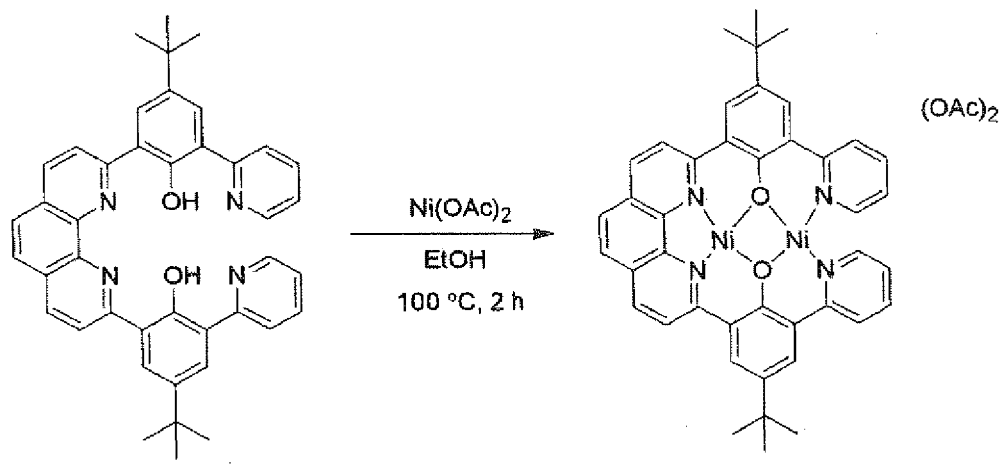


(N)

The ligand synthesized in Synthetic Example 7 was used as the above ligand which was the raw material of the complex. Under a nitrogen atmosphere, 0.200 g of the ligand and 30 mL of ethanol solution containing 0.250 g of nickel acetate tetrahydrate were poured into a 50 mL egg plant-shape flask, and the mixture was stirred under heating at 100°C for 2 hours to precipitate an orange solid. The solid was taken by filtration, and was then washed with ethanol and diethyl ether, and dried, whereby Multinuclear Complex (N) was obtained (amount: 0.276 g, yield: 81 %). When the interatomic distance between the transition metal atoms was calculated by the above calculation method, at least one of the distances was 2.804 Å. In the above reaction formula, "$(OAc)_2$" shows that two equivalents of an acetic acid ion exists as a counter ion.
Elementary Analysis Value (%):
Calculated Value (Calcd for $C_{46}H_{42}N_4Ni_2O_6$): C, 63.93; H, 4.90; N, 6.07
Actual Measurement Value: C, 63.22; H, 5.02; N, 6.43

Synthesis Example 15 [Synthesis of Multinuclear Complex (O)]

Multinuclear Complex (O) was synthesized according to the following reaction formula.
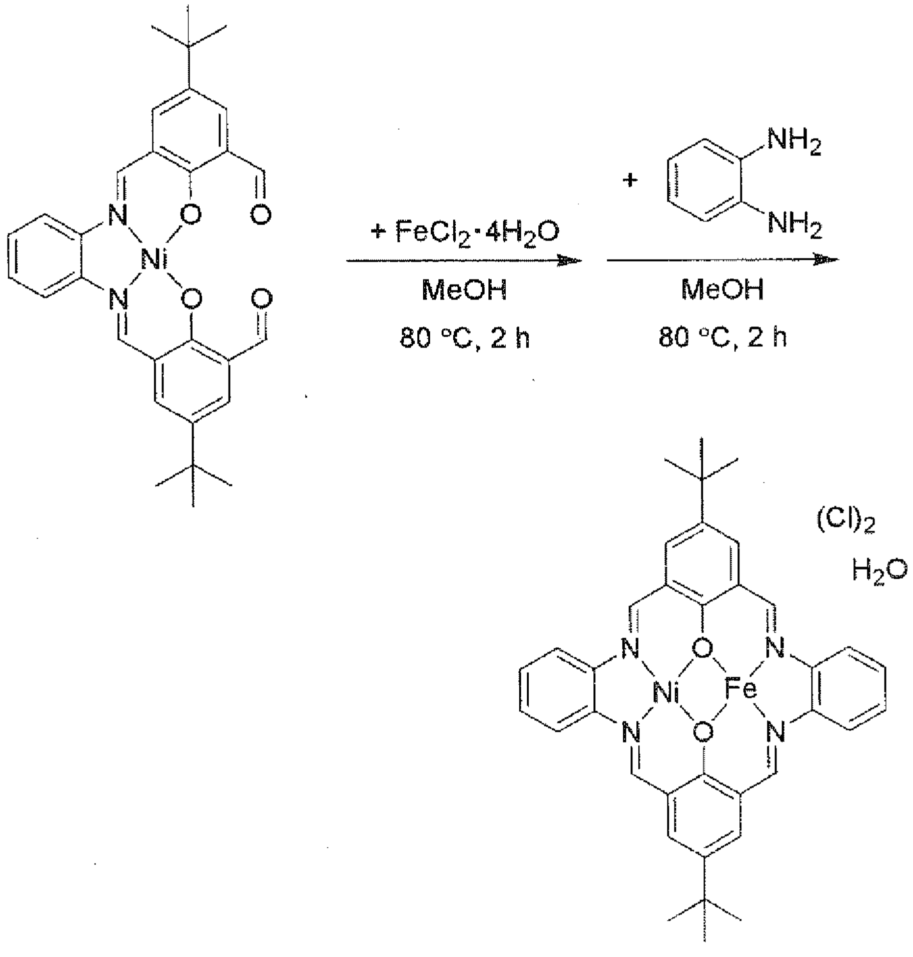


(O)

The Ni ligand as a raw material for the multinuclear complex was synthesized in accordance with the method described in Z. Anorg. Allg. Chem., 626, 1934 (2000). Under a nitrogen atmosphere, 0.200 g of the Ni ligand and 10 mL of methanol solution containing 0.080 g of iron chloride tetrahydrate were poured into a 50 mL egg plant-shape flask, and the mixture was stirred under heating at 80°C for 2 hours. After the mixture was cooled to room temperature, 5 mL of methanol solution containing 0.090 g of 1,2-phenylenediamine was added with stirring and the resulting mixture was further stirred at 80°C for 2 hours to obtain an orange solid. The solid was taken by filtration, and was then washed with diethyl ether, and dried, whereby Multinuclear Complex (O) was obtained (amount: 0.127 g, yield: 46%). When the interatomic distance between the transition metal atoms was calculated by the above calculation method, at least one of the distances was 2.877 Å. In the above reaction formula, "$(Cl)_2$" shows that two equivalents of a chloride ion exists as a counter ion, "$H_2O$" shows that one equivalent of a water molecule is contained.
Elementary Analysis Value (%):
Calculated Value (Calcd for $C_{36}H_{36}Cl_2FeN_4NiO_3$): C, 57.03; H, 4.79; N, 7.39
Actual Measurement Value: C, 56.84; H, 4.97; N, 7.25

Synthesis Example 16 [Synthesis of Mononuclear Complex (P)]

Mononuclear Complex (P) shown in the following reaction formula was synthesized with reference to the method described in Tatsuhiro Okada, et al., Electrochimica Acta, 45, 4419 (2000).
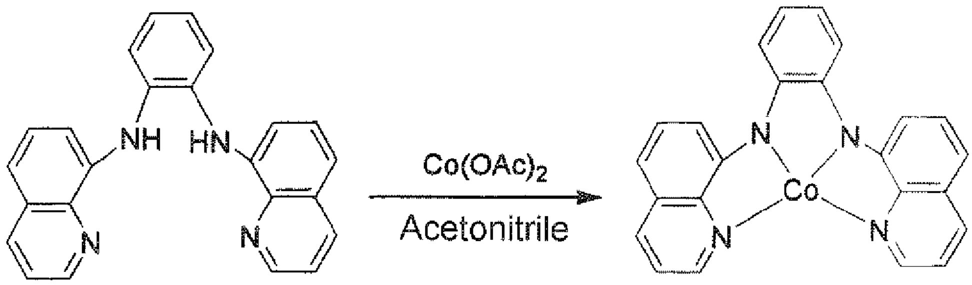


(P)

Example 1 (Evaluation of Oxygen-Reduction Ability)

[Preparation of Electrode Catalyst]

Multinuclear Complex (A) and a carbon powder (Ketjen Black EC300J, manufactured by Lion Corporation) were mixed with each other in a mass ratio of 1:4 and the mixture was stirred at room temperature in ethanol. Then, the mixture was dried at room temperature under a reduced pressure of 1.5 Torr for 12 hours to prepare an electrode catalyst.

[Preparation of Electrode]

As the electrode, a ring disk electrode was used in which the disk part was made of glassy carbon (6.0 mmϕ) and the ring part was made of Pt (ring inside diameter: 7.3 mm, ring outside diameter: 9.3 mm). 0.5 mL of solution obtained by diluting a completely fluorinated ionomer having a sulfonic acid group (5 mass% Nafion solution, manufactured by Sigma-Aldrich Co.) at a dilution ratio of 1/50 with methanol was added in a sample bottle containing 1 mg of the above electrode catalyst and the mixture was subjected to dispersion treatment ultrasonically. 10 μL of the obtained suspension liquid was dripped on the disk part of the above electrode, followed by drying at room temperature for 30 minutes to obtain an electrode for measurement.

[Evaluation of Oxygen-Reduction Ability by Rotating Ring Disk Electrode]

The electrode prepared above was rotated to evaluate the current value of oxygen-reduction reaction at the time. The measurements were conducted at room temperature under a nitrogen atmosphere and under an oxygen atmosphere, and the value obtained by subtracting the current value measured under a nitrogen atmosphere from the current value measured under an oxygen atmosphere was defined as the oxygen-reduction current value. The measuring device and measuring conditions are as follows.

Measuring device

Rotating ring disk electrode device: Nikko Keisoku RRDE-1
Dual Potentiogalvanostat: Nikko Keisoku Model DPGS-1
Function Generator: Toho Giken Model FG-02

Measuring condition

Test solution: 0.05 mol/L sulfuric acid solution
Reference electrode: Reversible hydrogen electrode (RHE)
Counter electrode: Platinum wire
Disk potential sweep speed: 5 mV/s
Ring potential: 1.4V vs RHE
Electrode rotation speed: 600 rpm

Using each values of the disk current and ring current obtained by measurement, oxygen four electron-reduction rate of the above electrode catalyst was calculated. The four-electron reduction rate (%$H_2O$) was calculated based on the following equation:

$$\%H_2O = \frac{i_D - i_R / N_{r/d}}{i_D + i_R / N_{r/d}} \times 100$$

wherein $i_D$ represents a disk current, $i_R$ represents a ring current and $N_{r/d}$ represents a rate of trapping a disk reaction product in the ring electrode (collection efficiency). The collection efficiency was measured by using $[Fe(CN)_6]^{3-/4-}$ oxidation-reduction system, to find that it was 0.38 in the case of the electrode used in this example.

Using the above collection efficiency, the oxygen four electron-reduction rate of the above electrode catalyst was calculated. The oxygen four-electron reduction rate and mass activity are shown in Table 1. Here, the mass activity was a value obtained by dividing the current density of the reversible hydrogen electrode at a potential of 0.6 V by the amount of a metal to be carried per electrode unit area.

Electrodes were prepared in the same manner as above except that Multinuclear Complex (A) was changed to Multinuclear Complexes (B), (C), (D), (E) and (F), respectively, and the oxygen-reduction ability of each of the obtained electrodes was evaluated. The results are shown in Table 1.

Comparative Example 1

Mononuclear Complex (P) and a graphite powder (manufactured by Wako Pure Chemical; 45 μm) were mixed at a ratio by weight of 1:4 in ethanol, followed by drying under vacuum to obtain an electrode catalyst. The electrode catalyst was evaluated according to the method described in Example 1. The results are shown in Table 1.

Table 1

| Used Metal Complex | Four-electron reduction rate (%) | Mass Activity (A/g(M)) |
|---|---|---|
| Multinuclear Complex (A) | 59 | 0.65 |
| Multinuclear Complex (B) | 64 | 40.8 |
| Multinuclear Complex (C) | 75 | 3.15 |
| Multinuclear Complex (D) | 67 | 0.83 |
| Multinuclear Complex (E) | 76 | 0.98 |
| Multinuclear Complex (F) | 69 | 4.1 |
| Comparative Example 1 Mononuclear Complex (P) | 43 | 0.44 |

Example 2 (Evaluation of Oxygen-Reduction Ability)

[Preparation of Electrode Catalyst]

Multinuclear Complex (A) and a carbon powder (Ketjen Black EC300J, manufactured by Lion Corporation) were mixed with each other in a mass ratio of 1:4 and the mixture was stirred at room temperature for 15 minutes in ethanol. Then, the mixture was dried at room temperature under a reduced pressure of 1.5 Torr for 12 hours. The above treated mixture was heat-treated at an intended temperature under 200 mL/min of a nitrogen stream for 2 hours by using a tubular furnace to prepare an electrode catalyst. The obtained electrode catalyst was evaluated according to the method described in Example 1. The heat treatment temperature and the results of evaluation are shown in Table 2.

Electrode catalysts were prepared in the same manner as above except that Multinuclear Complex (A) was changed to Multinuclear Complexes (B), (G), (H), (I), (J), (K), (L) and (M), respectively, and the oxygen-reduction ability of each of the obtained electrodes was evaluated. The temperature in the heat treatment was that as described in Table 2.

Comparative Example 2

The mononulear complex (P) and a graphite powder (manufactured by Wako Pure Chemical; 45μm) were mixed with each other in a ratio by weight of 1:4. The above treated mixture was heat-treated under a nitrogen stream for 2 hours by using a tubular furnace. The oxygen-reduction ability of the heat-treated product was evaluated according to the method described above.

Table 2

| Used Metal Complex | Heat Treatment Temperature (°C) | Four-electron reduction rate (%) | Mass Activity (A/g(M)) |
|---|---|---|---|
| Multinuclear Complex (A) | 500 | 90 | 60 |
| Multinuclear Complex (B) | 450 | 80 | 350 |
| Multinuclear Complex (G) | 800 | 80 | 700 |
| Multinuclear Complex (G) | 900 | 59 | 518 |
| Multinuclear Complex (H) | 800 | 84 | 250 |
| Multinuclear Complex (I) | 800 | 75 | 60 |
| Multinuclear Complex (J) | 400 | 70 | 100 |
| Multinuclear Complex (K) | 550 | 65 | 110 |
| Multinuclear Complex (L) | 450 | 70 | 125 |
| Multinuclear Complex (M) | 800 | 70 | 216 |
| Comparative Example 2 Mononuclear Complex (P) | 600 | 39 | 10 |

Example 3 (Evaluation of Hydrogen-Oxidation Ability)

[Preparation of Electrode Catalyst]

Multinuclear Complex (N) and a carbon powder (Ketjen Black EC300J, manufactured by Lion Corporation) were mixed with each other in a mass ratio of 1:4, to prepare an electrode catalyst. A part of the above treated mixture was heat-treated under a nitrogen stream of 200 mL/min for 2 hours by using a tubular furnace. The temperature in the heat treatment was that as described in Table 3.

[Preparation of Electrode]

As the electrode, a ring disk electrode was used in which the disk part was made of glassy carbon (6.0 mmϕ) and the ring part was made of Pt (ring inside diameter: 7.3 mm, ring outside diameter: 9.3 mm). 0.5 mL of a solution obtained by diluting a completely fluorinated ionomer having a sulfonic acid group (5 mass% Nafion solution, manufactured by Sigma-Aldrich Co.) at a dilution ratio of 1/50 with methanol was added in a sample bottle containing 1 mg of the above electrode catalyst and the mixture was subjected to dispersion treatment ultrasonically. 10 μl of the obtained suspension liquid was dripped on the disk part of the above electrode, followed by drying at room temperature for 30 minutes to obtain an electrode for measurement.

[Evaluation of Hydrogen-Oxidation Ability by Rotating Ring Disk Electrode]

The measurements were conducted at room temperature under a nitrogen atmosphere and under a hydrogen atmosphere, and the value obtained by subtracting the current value measured under a nitrogen atmosphere from the current value measured at 0.1 V under a hydrogen atmosphere was defined as the hydrogen oxidation current value. The measuring device and measuring conditions are as follows. The results are shown in Table 3. Here, the mass activity means a value obtained by dividing the above current value at a potential of 0.1 V by the area of the reversible hydrogen electrode and then, dividing the resulting value by the amount of the metal to be carried per unit area of the electrode. The hyphen (-) in Table 3 shows that no heat treatment was carried out.

Measuring device

Rotating ring disk electrode device: Nikko Keisoku RRDE-1
Dual Potentiogalvanostat: Nikko Keisoku DPGS-1
Function Generator: Toho Giken Model FG-02

Measuring method

Linear-sweep voltammetry

Measuring condition

Test solution: 0.10 mol/L perchloric acid solution
Reference electrode: Reversible hydrogen electrode (RHE)
Counter electrode: Platinum wire
Disk potential sweep speed: 5 mV/s

Table 3

| Used Metal Complex | Heat Treatment Temperature (°C) | Mass Activity (A/g(M)) |
|---|---|---|
| Multinuclear Complex (N) | - | 40 |
| Multinuclear Complex (N) | 350 | 60 |
| Multinuclear Complex (N) | 500 | 40 |

Example 4 (Evaluation of Hydrogen-Oxidation Ability)

Electrode catalysts were prepared in the same manner as above except that Multinuclear Complex (N) in Example 3 was changed to Multinuclear Complexes (B), (G), (M) and (O), respectively, and the hydrogen-oxidation ability was evaluated. The temperature in the heat treatment was that as described in Table 4. The results are shown in Table 4. This measurement was made by rotating the disk electrode at 300 rpm.

Table 4

| Used Catalyst | Heat Treatment Temperature (°C) | Mass Activity (A/g(M)) |
|---|---|---|
| Multinuclear Complex (B) | 450 | 140 |
| Multinuclear Complex (B) | 600 | 70 |
| Multinuclear Complex (G) | - | 110 |
| Multinuclear Complex (G) | 600 | 280 |
| Multinuclear Complex (G) | 800 | 100 |
| Multinuclear Complex (M) | 600 | 80 |
| Multinuclear Complex (O) | - | 40 |
| Multinuclear Complex (O) | 400 | 110 |

(continued)

| Used Catalyst | Heat Treatment Temperature (°C) | Mass Activity (A/g(M)) |
|---|---|---|
| Multinuclear Complex (O) | 600 | 60 |
| (The hyphen (-) in Table shows that no heat treatment was carried out.) | | |

Synthesis Example 21 [Synthesis of Mononuclear Metal Complex (XA)]

Mononuclear Metal Complex (XA) was synthesized according to the following reaction formula.

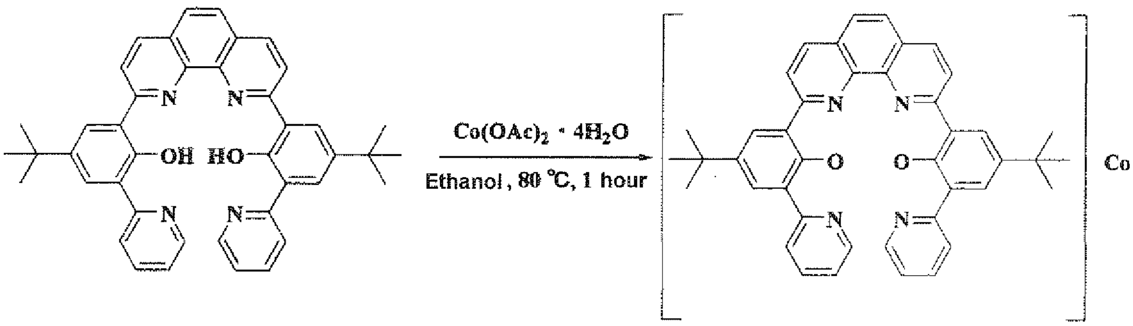


(XA)

The above compound as a raw material for the complex was synthesized on the basis of Tetrahedron., 55, 8377 (1999). 0.315 g of the ligand and 50 mL of ethanol solution containing 0.124 g of cobalt acetate tetrahydrate were loaded into a 100-mL egg plant flask, and the mixture was stirred for 1 hour while being heated at 80°C, whereby a brown solid was produced. The solid was taken by filtration, and was then washed with ethanol and dried in a vacuum, whereby Mononulear Metal Complex (XA) was obtained (amount: 0.270 g, yield: 81%).
Elementary Analysis Value (%):
Calcd for $C_{42}H_{40}CoN_4O_4$; C, 69.70; H, 5.57; N, 7.74
Found: C, 70.01; H, 5.80; N, 7.56
ESI-MS [M+·]: 687.1

Synthesis Example 22 [Synthesis of Mononuclear Metal Complex (XB)]

Mononuclear Metal Complex (XB) was synthesized via Compound (XA) and Compound (XB) in accordance with the following reaction formula.

[Synthesis of Compound (XA)]

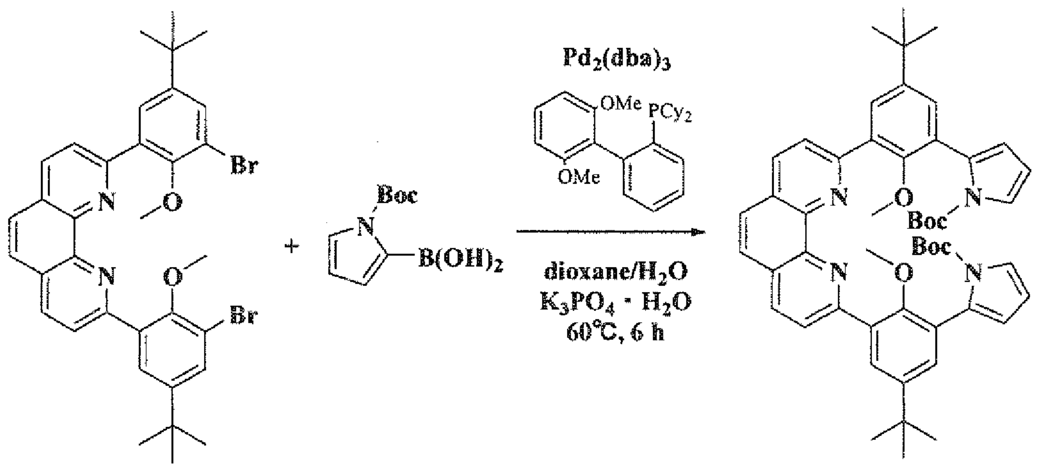


Compound (XA)

As a raw material, 2,9-di(3'-bromo-5'-tert-butyl-2'-methoxyphenyl)-1,10-phenanthroline was synthesized by the method described in Tetrahedron., 1999, 55, 8377. Under an argon atmosphere, 3.945 g of 2,9-di(3'-bromo-5'-tert-butyl-2'-methoxyphenyl)-1,10-phenanthroline, 3.165 g of 1-N-Boc-pyrrole-2-boronic acid, 0.138 g of tris(benzylideneacetone) dipalladium, 0.247 g of 2-dicyclohexylphosphino-2',6'-dimethoxybiphenyl, and 5.527 g of potassium phosphate were dissolved in mixed solvent of 200 mL of dioxane and 20 mL of water, and the mixture was stirred at 60°C for 6 hours. After the completion of the reaction, the solution was left standing to cool, distilled water and chloroform were added to the solution, and an organic layer was extracted. The resultant organic layer was concentrated, whereby a black residue was obtained. The residue was purified with a silica gel column, whereby Compound (XA) was obtained.

$^1$H-NMR (300 MHz, $CDCl_3$) δ 1.34 (s, 18H), 1.37 (s, 18H), 3.30 (s, 6H), 6.21 (m, 2H), 6.27 (m, 2H), 7.37 (m, 2H), 7.41 (s, 2H), 7.82 (s, 2H), 8.00 (s, 2H), 8.19 (d, J = 8.6 Hz, 2H), 8.27 (d, J = 8.6 Hz, 2H)

[Synthesis of Compound (XB)]

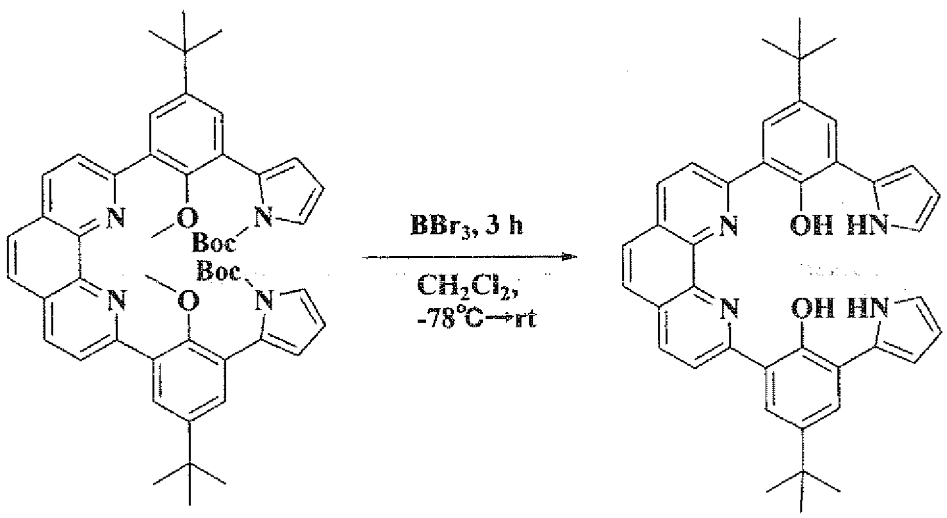


Compound (XA) Compound (XB)

Under a nitrogen atmosphere, 0.904 g of Compound (XA) was dissolved in 10 mL of anhydrous dichloromethane. While the dichloromethane solution was cooled to -78°C, 8.8 mL of boron tribromide (1.0-M dichloromethane solution) was slowly dropped to the dichloromethane solution. After the dropping, the mixture was stirred without any change for 10 minutes, and was then left to stand while being stirred so that its temperature might reach room temperature. Three (3) hours after that, the reaction solution was cooled to 0°C, and a saturated aqueous solution of $NaHCO_3$ was added to the solution. After that, an organic layer was extracted by adding chloroform to the mixture, and was then concentrated. The obtained brown residue was purified with a silica gel column, whereby Compound (XB) was obtained.
$^1$H-NMR (300 MHz, $CDCl_3$) δ 1.40 (s, 18H), 6.25 (m, 2H), 6.44 (m, 2H), 6.74 (m, 2H), 7.84 (s, 2H), 7.89 (s, 2H), 7.92 (s, 2H), 8.35 (d, J = 8.4 Hz, 2H), 8.46 (d, J = 8.4 Hz, 2H), 10.61 (s, 2H), 15.88 (s, 2H).
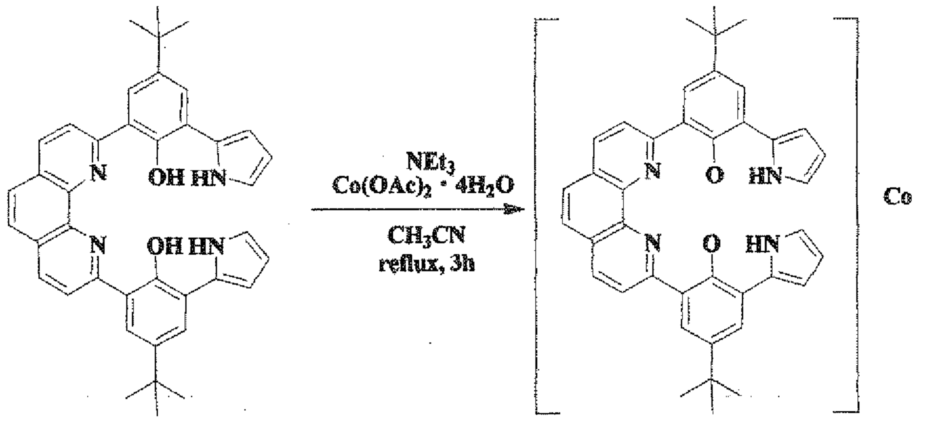


Compound (XB)

Mononuclear Metal Complex (XB)

Under a nitrogen atmosphere, 0.100 g of Compound (XB) and solution of 0.040 g of cobalt acetate tetrahydrate in 20 mL of acetonitrile deaerated with Ar were loaded into a 100-mL two-necked flask, and the mixture was stirred at room temperature. Triethylamine in 45 μl was dropped to the solution, and the mixture was refluxed for 3 hours. The solution was concentrated and cooled, and then the resultant solid was taken by filtration with a membrane filter and dried, whereby Mononuclear Metal Complex (XB) was obtained (yield 0.098 g). ESI-MS [M+·]: 663.1

Synthesis Example 23 [Synthesis of Mononuclear Metal Complex (XC)]

Mononuclear Metal Complex (XC) was synthesized according to the following reaction formula in accordance with the method described in Tatsuhiro Okada, et al., Journal of Inorganic and Organometallic Polymers, 9, 199 (1999).
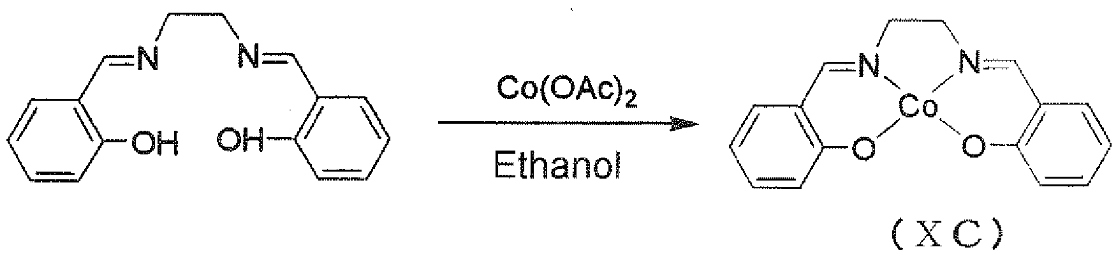


(XC)

Synthesis Example 24 [Synthesis of Mononuclear Metal Complex (XD)]

Mononuclear Metal Complex (XD) was synthesized according to the following reaction formula.
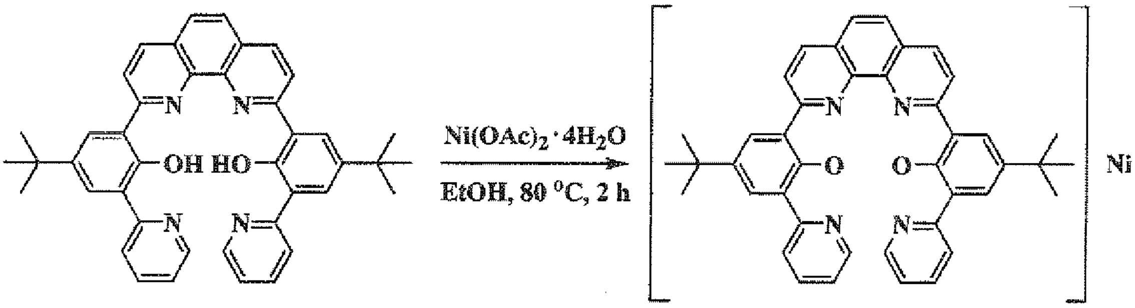


(XD)

First, 0.250 g of the ligand and 30 mL of ethanol solution containing 0.100 g of nickel acetate tetrahydrate were loaded into a 50-mL egg plant flask, and the mixture was stirred for 2 hours while being heated at 80°C. The produced orange precipitate was taken by filtration, washed with ethanol, and dried in a vacuum, whereby Mononuclear Metal Complex (XD) was obtained (amount 0.242 g, yield 89%).
Elementary Analysis Value (%):
Calcd for $C_{42}H_{36}N_4NiO_2$; C, 73.38; H, 5.28; N, 8.15
Found: C, 72.42; H, 5.27; N,7.96
ESI-MS [M+·]: 687.1

Synthesis Example 25 [Synthesis of Mononuclear Metal Complex (XE)]

Mononuclear Metal Complex (XE) was synthesized according to the following reaction formula.
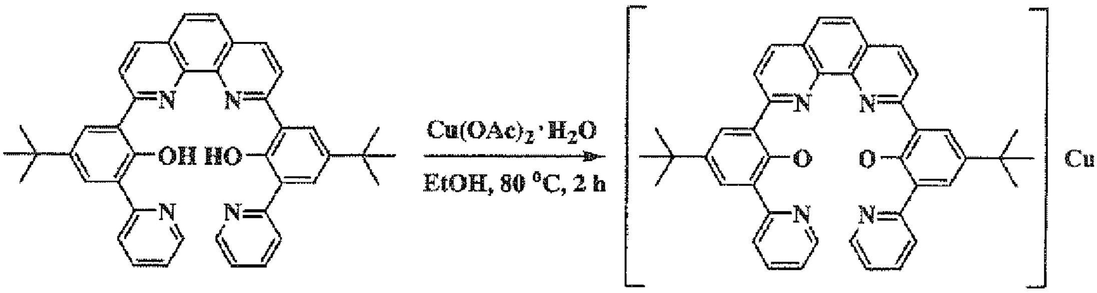


(XE)

First, 0.315 g of the ligand and 30 mL of ethanol solution containing 0.100 g of cupric acetate monohydrate were loaded into a 50-mL egg plant flask, and the mixture was stirred for 2 hours while being heated at 80°C. The produced ocher precipitate was taken by filtration, washed with ethanol, and dried in a vacuum, whereby Mononuclear Metal Complex (XE) was obtained (amount 0.250 g, yield 72%).
Elementary Analysis Value (%):
Calcd for $C_{42}H_{36}CuN_4O_2$; C, 72.87; H, 5.24; N, 8.09
Found: C, 72.22; H, 5.37; N, 7.77
ESI-MS [M+·]: 692.1

Synthesis Example 26 [Synthesis of Mononuclear Metal Complex (XF)]

Mononuclear Metal Complex (XF) was synthesized according to the following reaction formula.
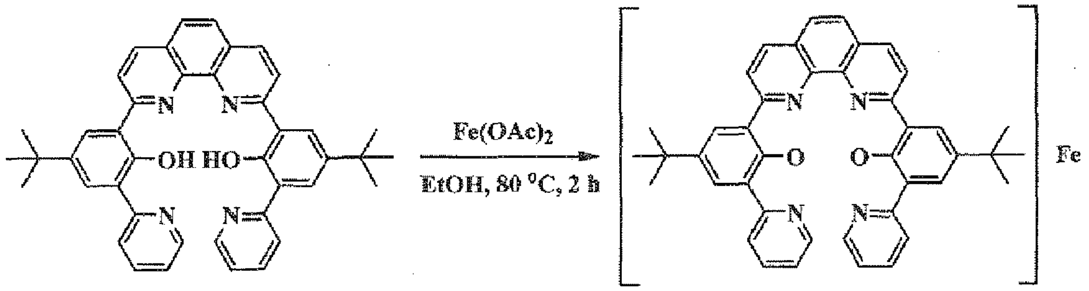


(XF)

First, 0.440 g of the ligand and 30 mL of ethanol solution containing 0.120 g of ferrous acetate were loaded into a 50-mL egg plant flask, and the mixture was stirred for 2 hours while being heated at 80°C. The produced orange precipitate was taken by filtration, washed with ethanol, and dried in a vacuum, whereby Mononuclear Metal Complex (XF) was obtained (amount 0.380 g, yield 80%).
Elementary Analysis Value (%):
Calcd for $C_{42}H_{36}FeN_4O_2$; C, 73.68; H, 5.30; N, 8.18
Found: C, 72.20; H, 5.42; N, 7.85
ESI-MS [M+·]: 684.0

Example 11 (Evaluation of Oxygen-Reduction Ability)

[Preparation of Electrode Catalyst]

Mononuclear Metal Complex (XA) and a carbon powder (Ketjen Black EC300J, manufactured by Lion Corporation) were mixed with each other in a mass ratio of 1:4 and the mixture was stirred at room temperature in ethanol for 15 minutes. Then, the mixture was dried at room temperature under a reduced pressure of 1.5 Torr for 12 hours. The above treated mixture was heat-treated at 800°C under a nitrogen stream of 200 mL/min for 2 hours by using a tubular furnace to obtain an electrode catalyst (A-1).

[Preparation of Electrode]

As the electrode, a ring disk electrode was used in which the disk part was made of glassy carbon (6.0 mmϕ) and the ring part was made of Pt (ring inside diameter: 7.3 mm, ring outside diameter: 9.3 mm).

0.5 mL of a solution obtained by diluting a completely fluorinated ionomer having a sulfonic acid group (5 mass% Nafion solution, manufactured by Sigma-Aldrich Co.) at a dilution ratio of 1/50 with methanol was added in a sample bottle containing 1 mg of the above electrode catalyst (A-1) and the mixture was subjected to dispersion treatment ultrasonically. 10 μL of the obtained suspension liquid was dripped on the disk part of the above electrode, followed by drying at room temperature for 30 minutes to obtain an electrode for measurement.

[Evaluation of Oxygen-Reduction Ability by Rotating Ring Disk Electrode]

The electrode prepared above was rotated to evaluate the current value of oxygen-reduction reaction at the time. The measurements were conducted at room temperature under a nitrogen atmosphere and under an oxygen atmosphere, and the value obtained by subtracting the current value measured under a nitrogen atmosphere from the current value measured under an oxygen atmosphere was defined as the oxygen-reduction current value. The measuring device and measuring conditions are as follows.

Measuring device

Rotating ring disk electrode device: Nikko Keisoku RRDE-1
Dual Potentiogalvanostat: Nikko Keisoku Model DPGS-1
Function Generator: Toho Giken Model FG-02

Measuring condition

Test solution: 0.05 mol/L sulfuric acid solution
Reference electrode: Reversible hydrogen electrode (RHE)
Counter electrode: Platinum wire
Disk potential sweep speed: 5 mV/s
Ring potential: 1.4V vs RHE
Electrode rotation speed: 600 rpm

The oxygen-reduction catalyst activity of the electrode catalyst (A-1) is shown in Table 5. In this case, the catalyst activity is shown as a value obtained by dividing the current density of the reversible hydrogen electrode at a potential of 0.6 V by the amount of a metal to be carried per electrode unit area. It was found that the heat-treated product of Mononuclear Metal Complex (XA) was superior in oxygen-reduction ability compared to that obtained in Comparative Example 11.

In the above operations, Mononuclear Metal Complex (XB) was used in place of Mononuclear Metal Complex (XA) to prepare an electrode catalyst (XB). The oxygen-reduction ability was evaluated according to the above method. The results are shown in Table 5.

Comparative Example 11

Mononuclear Metal Complex (XC) and a graphite powder (Aldrich; 1 to 2 μm) were mixed with each other in a ratio by weight of 1:4 and the mixture was heat-treated at 600°C under a nitrogen stream for 2 hours by using a tubular furnace to obtain an electrode catalyst (XC). The oxygen-reduction ability of the electrode catalyst (XC) was evaluated according to the method described in Example 11. The results are shown in Table 5. It was found that the catalyst activity of the electrode catalyst (XC) prepared by using Mononuclear Metal Complex (XC) containing no aromatic heterocycle was remarkably lower than those of the electrode catalyst (A-1) and electrode catalyst (XB).

Table 5

| | Mass Activity (A/g(M)) | For-electron reduction rate (%) |
|---|---|---|
| Electrode Catalyst (A-1) | 750 | 80 |
| Electrode Catalyst (XB) | 560 | 64 |
| Electrode Catalyst (XC) Comparative Example | 10 | 48 |

Example 12 (Calculation using the density function)

In Mononuclear Metal Complex (XA), Mononuclear Metal Complex (XB) and Mononuclear Metal Complex (XC) used in Example 11, one oxygen molecule was adsorbed to the mononuclear metal complex to make an oxygen molecule-adsorbed mononuclear metal complex and the Mulliken charges of two oxygen atoms constituting the one oxygen molecule was calculated by the density function. The absolute value of the difference between the Mulliken charges of two oxygen atoms and the sum of two Mulliken charges are shown in Table 6.

Table 6

| | Absolute value of difference between Mulliken charges | Sum of Mulliken charges |
|---|---|---|
| Mononuclear Complex (XA) | 0.0563 | -0.1718 |
| Mononuclear Complex (XB) | 0.0569 | -0.1504 |
| Mononuclear Complex (XC) | 0.06268 | -0.2799 |

Example 13 (Evaluation of Hydrogen-Oxidation Ability)

[Preparation of Electrode Catalyst]

Mononuclear Metal Complex (XA) and a carbon carrier (Ketjen Black EC300J, manufactured by Lion Corporation) were mixed with each other in a mass ratio of 1:4, to prepare an electrode catalyst (A-2).

[Preparation of Electrode]

As the electrode, a ring disk electrode was used in which the disk part was made of glassy carbon (6.0 mmϕ) and the ring part was made of Pt (ring inside diameter: 7.3 mm, ring outside diameter: 9.3 mm). 0.5 mL of a solution obtained by diluting a completely fluorinated ionomer having a sulfonic acid group (5 mass% Nafion solution, manufactured by Sigma-Aldrich Co.) at a dilution ratio of 1/50 with methanol was added in a sample bottle containing 1 mg of the above electrode catalyst and the mixture was subjected to dispersion treatment ultrasonically. 10 μL of the obtained suspension liquid was dripped on the disk part of the above electrode, followed by drying at room temperature for 30 minutes to obtain an electrode for measurement.

[Evaluation of Hydrogen-Oxidation Ability by Rotating Ring Disk Electrode]

The measurements were conducted at room temperature under a nitrogen atmosphere and under a hydrogen atmosphere, and the value obtained by subtracting the current value measured under a nitrogen atmosphere from the current value measured at 0.1 V under a hydrogen atmosphere was defined as the hydrogen oxidation current value. The measuring device and measuring conditions are as follows.

Measuring device

Rotating ring disk electrode device: Nikko Keisoku RRDE-1
Dual Potentiogalvanostat: Nikko Keisoku DPGS-1
Function Generator: Toho Giken Model FG-02

Measuring method

Linear-sweep voltanmetry

Measuring condition

Test solution: 0.10 mol/L perchloric acid solution
Reference electrode: Reversible hydrogen electrode (RHE)
Counter electrode: Platinum wire
Disk potential sweep speed: 5 mV/s
Electrode rotation speed: 300 rpm

The hydrogen oxidation mass activity of the electrode catalyst (A-2) is shown in Table 7. It was found from Table 7 that the electrode catalyst (A-2) had hydrogen oxidation ability. Here, the mass activity means a value obtained by dividing the above current value at a potential of 0.1 V by the area of the reversible hydrogen electrode and then, dividing the resulting value by the amount of the metal to be carried per unit area of the electrode.

In the above operations, Mononuclear Metal Complex (XA) was changed to Mononuclear Metal Complex (XD), Mononuclear Metal Complex (XE) or Mononuclear Metal Complex (XF), to carry out the same operations as above to evaluate the hydrogen oxidation ability. As to Mononuclear Metal Complex (XE), an electrode catalyst (F-1) prepared by mixing Mononuclear Metal Complex (XE) and a carbon support (Ketjen Black EC300J, manufactured by Lion Corporation) were mixed with each other in a ratio by mass of 1:4 and an electrode catalyst (F-2) obtained by heat-treating the electrode catalyst (F-1) at 500°C for 2 hours were prepared to evaluate the hydrogen oxidation ability of each catalyst.

The results are shown in Table 7.
[Table 7]

Table 7

| Used Metal Complex | Electrode Catalyst | Mass Activity (A/g(M)) |
|---|---|---|
| Mononuclear Metal Complex (XA) | Electrode Catalyst (A-2) | 260 |
| Mononuclear Metal Complex (XD) | Electrode Catalyst (XD) | 100 |
| Mononuclear Metal Complex (XE) | Electrode Catalyst (XE) | 120 |
| Mononuclear Metal Complex (XF) | Electrode Catalyst (F-1) | 70 |
| Mononuclear Metal Complex (XF) | Electrode Catalyst (F-2) | 100 |

INDUSTRIAL APPLICABILITY

The catalyst of the present invention is excellent in catalyst activity and stability. Therefore, the catalyst of the present invention is favorable as an electrode catalyst for fuel cell.
Having described our invention as related to the present embodiments, it is our intention that the invention not be limited by any of the details of the description, unless otherwise specified, but rather be construed broadly within its spirit and scope as set out in the accompanying claims.
This non-provisional application claims priority under 35 U.S.C. § 119 (a) on Patent Application No. 2007-061014 filed in Japan on March 9, 2007, and Patent Application No. 2007-061026 filed in Japan on March 9, 2007, each of which is entirely herein incorporated by reference.

**Claims**

1. An electrode catalyst for fuel cell, comprising a multinuclear complex, wherein the multinuclear complex contains 2 to 4 transition metal atoms coordinated with a ligand having 5 to 15 coordination atoms in its molecule.

2. The electrode catalyst for fuel cell according to Claim 1, wherein the transition metal atoms of the Multinuclear complex are at least one selected from the group consisting of vanadium, chromium, manganese, iron, cobalt, nickel and copper.

3. The electrode catalyst for fuel cell according to Claim 1 or 2, wherein the coordination atoms of the multinuclear complex are at least one selected from the group consisting of a nitrogen atom and an oxygen atom.

4. The electrode catalyst for fuel cell according to any one of Claims 1 to 3, wherein the transition metal atoms of the multinuclear complex are crosslinked by an oxygen atom of an alkoxide or a phenoxide.

5. The electrode catalyst for fuel cell according to any one of Claims 1 to 4, wherein at least one of interatomic distances of transition metals arbitrarily-selected in the multinuclear complex is 3.6 A or less.

6. The electrode catalyst for fuel cell according to any one of Claims 1 to 5, wherein the ligand is a ligand represented by formula (I) or (II):

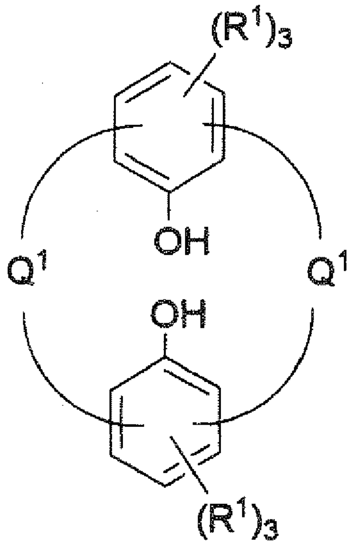

(I)

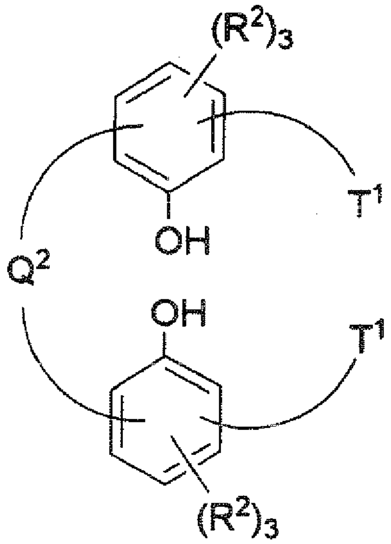

(II)

wherein $Q^1$ and $Q^2$ each represent a divalent organic group having at least two C=N bonds; $T^1$ represents a monovalent organic group having at least one C=N bond; $R^1$ and $R^2$ each independently represent a hydrogen atom or a substituent; two $R^1$s or $R^2$s may be bonded each other, respectively; $R^1$s and $R^2$s each may be the same or different; $Q^1$s each may be the same or different from each other; and $T^1$s may be the same or different from each other.

**7.** An electrode catalyst for fuel cell obtained by heating the multinuclear complex according to any one of Claims 1 to 6 at a temperature of 250°C or more and 1,500°C or less.

**8.** An electrode catalyst for fuel cell, comprising a multinuclear complex mixture containing the multinuclear complex according to any one of Claims 1 to 6, a carbon support and/or a conductive polymer.

**9.** An electrode catalyst for fuel cell produced by heating a multinuclear complex mixture containing the multinuclear complex according to any one of Claims 1 to 6, a carbon support and/or a conductive polymer at a temperature of 250°C or more and 1,500°C or less.

**10.** An electrode catalyst for fuel cell, comprising a mononuclear metal complex containing, as a ligand, an organic compound containing two or more phenol rings and three or more aromatic heterocycles.

**11.** The electrode catalyst for fuel cell according to Claim 10, wherein the mononuclear metal complex is represented by the formula (XI):

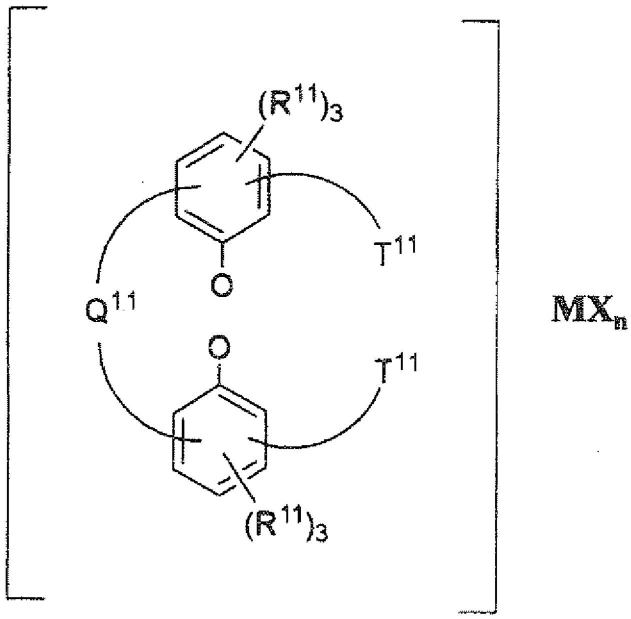

(XI)

wherein $R^{11}$ denotes a hydrogen atom or a substituent; neighboring two $R^{11}$s may be bonded each other; $R^{11}$s may be the same or different from each other; $Q^{11}$ represents a divalent organic group having at least one aromatic heterocyclic group; $T^{11}$ represents a monovalent organic group having at least one aromatic heterocyclic group; two groups for $T^{11}$ may be the same or different from each other; M represents a transition metal atom; X represents a counter ion electrically neutralizing the metal complex or a neutral molecule; n represents the number of X's in the complex, and an integer of 0 or more; and when X's are present, the X's may be the same or different from each other.

**12.** The electrode catalyst for fuel cell according to Claim 11, wherein the acid dissociation constant pKa of a conjugate acid of the aromatic heterocycle constituting $T^{11}$ of the formula (XI) is -2.0 or more.

**13.** The electrode catalyst for fuel cell according to any one of Claims 10 to 12, wherein when one oxygen molecule is adsorbed to the mononuclear metal complex and the Mulliken charges of two oxygen atoms constituting the one oxygen molecule is calculated by the density functional method, the absolute value of a difference between the Mulliken charges of the two oxygen atoms is 0.020 to 0.062.

**14.** The electrode catalyst for fuel cell according to any one of Claims 10 to 13, wherein when one oxygen molecule is adsorbed to the mononuclear metal complex and the Mulliken charges of two oxygen atoms constituting the one oxygen molecule is calculated by the density functional method, the sum of the Mulliken charges of the two oxygen atoms is -0.25 or more.

**15.** An electrode catalyst for fuel cell produced by heating the mononuclear metal complex according to any one of Claims 10 to 14 at a temperature of 250°C or more and 1,500°C or less.

**16.** An electrode catalyst for fuel cell, comprising a mononuclear metal complex mixture containing the mononuclear metal complex according to any one of Claims 10 to 14, a carbon support and/or a conductive polymer.

**17.** An electrode catalyst for fuel cell produced by heating a mononuclear metal complex mixture containing the mononuclear metal complex according to any one of Claims 10 to 14, a carbon support and/or a conductive polymer at a temperature of 250°C or more and 1,500°C or less.

## INTERNATIONAL SEARCH REPORT

International application No.
PCT/JP2008/054330

A. CLASSIFICATION OF SUBJECT MATTER
*B01J31/22*(2006.01)i, *B01J37/08*(2006.01)i, *H01M4/88*(2006.01)i, *H01M4/90*(2006.01)i, *H01M8/10*(2006.01)n

According to International Patent Classification (IPC) or to both national classification and IPC

B. FIELDS SEARCHED

Minimum documentation searched (classification system followed by classification symbols)
B01J31/22, B01J37/08, H01M4/88, H01M4/90, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2007/956 A1 (Sumitomo Chemical Co., Ltd.),<br>04 January, 2007 (04.01.07),<br>Full text<br>& JP 2007-38213 A | 1-5,8<br>6-7,9-17 |
| X<br>A | JP 59-194362 A (Pentel Co., Ltd.),<br>05 November, 1984 (05.11.84),<br>Full text<br>(Family: none) | 1-3,8<br>4-7,9-17 |
| X<br>A | JP 58-75774 A (Tokyo Shibaura Electric Co., Ltd.),<br>07 May, 1983 (07.05.83),<br>Full text<br>(Family: none) | 1-3,8<br>4-7,9-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 June, 2008 (18.06.08) | 01 July, 2008 (01.07.08) |
| Name and mailing address of the ISA/<br>Japanese Patent Office<br>Facsimile No. | Authorized officer<br><br>Telephone No. |

Form PCT/ISA/210 (second sheet) (April 2007)

INTERNATIONAL SEARCH REPORT

International application No. PCT/JP2008/054330

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-202688 A (Asahi Kasei Corp.), 03 August, 2006 (03.08.06), Full text (Family: none) | 1-17 |
| A | JP 2006-504232 A (Idea Lab S.r.l.), 02 February, 2006 (02.02.06), Full text & EP 1556916 A & WO 2004/36674 A2 | 1-17 |
| A | JP 11-253811 A (Japan Science and Technology Corp.), 21 September, 1999 (21.09.99), Full text (Family: none) | 1-17 |
| P,X<br>P,A | WO 2007/91616 A1 (Sumitomo Chemical Co., Ltd.), 16 August, 2007 (16.08.07), Full text & JP 2007-238601 A | 1-7<br>8-17 |
| P,X<br>P,A | WO 2007/91659 A1 (Waseda University), 16 August, 2007 (16.08.07), Full text & JP 2007-238604 A | 1-5<br>6-17 |
| P,X<br>P,A | WO 2007/91713 A1 (Sumitomo Chemical Co., Ltd.), 16 August, 2007 (16.08.07), Full text & JP 2007-238603 A | 1-5<br>6-17 |

Form PCT/ISA/210 (continuation of second sheet) (April 2007)

**INTERNATIONAL SEARCH REPORT**

International application No.
PCT/JP2008/054330

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
(See extra sheet)

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

INTERNATIONAL SEARCH REPORT

International application No.
PCT/JP2008/054330

Continuation of Box No.III of continuation of first sheet(2)

There must exist a special technical feature so linking a group of inventions of claims as to form a single general inventive concept in order that the group of inventions may satisfy the requirement of unity of invention. Claims 1-17 are linked only by the technical feature of "an electrode catalyst for fuel cells using a metal complex containing an organic compound as a ligand", but this technical feature cannot be a special technical feature since it is disclosed in paragraphs [0003]-[0008] of the description of this international application and the like.

Consequently, there is no special technical feature so linking the group of inventions of claims 1-17 as to form a single general inventive concept. Therefore, it is obvious that the group of inventions of claims 1-17 does not satisfy the requirement of unity of invention.

Next, the number of inventions defined in claims 1-17 will be examined. The technical feature of the invention of claims 1-9 is "an electrode catalyst for fuel cells, which uses a polynuclear complex wherein a ligand having 5-15 coordinating atoms in a molecule is coordinated to 2-4 transition metal atoms". Meanwhile, the technical feature of the invention of claims 10-17 is "an electrode catalyst for fuel cells, which uses a mononuclear metal complex containing an organic compound having two or more phenol rings and three or more aromatic heterocyclic rings as a ligand".

Consequently, claims of this international application are considered to contain the following two inventions: the invention of claims 1-9; and the invention of claims 10-17.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006260909 A
- JP 2004217507 A
- JP 2007061014 A
- JP 2007061026 A


### Non-patent literature cited in the description


- **Tatsuhiro Okada et al.** *Electrochimica Acta,* 2000, vol. 45, 4419
- Development of an electrode catalyst for fuel cell using an organometal complex. **Tatsuhiro Okada.** Meeting of Japan Catalyst Society. Tsukuba Division, 10 December 2004
- **Susumu Kitagawa ; Ryo Kitaura ; Shin-ichiro Noro.** *Angewandte Chemie International Edition,* 2004, vol. 43, 2334
- **Z. Liu ; F. C. Anson.** *Inorganic Chemistry,* 2001, vol. 40, 1329
- **M. D. Godbole et al.** *Europian Journal of Inorganic Chemistry,* 2005, vol. 305
- **S. -Y. Liu ; D. G. Nocara.** *Journal of American Chemical Society,* 2005, vol. 127, 5278
- **Tatsuhiro Okada et al.** *Journal of Inorganic and organometallic Polymers,* 1999, vol. 9, 199
- **Ryogo KUBO et al.** Encyclopedia of Physics and Chemistry. Iwanami Shoten, 10 January 1991, 966
- *Journal of Organic Chemistry,* 2004, vol. 69, 5419
- *Australian Journal of Chemistry,* 1970, vol. 23, 2225
- *Tetrahedron,* 1999, vol. 55, 8377
- Chemistry Unabridged Dictionary. Tokyo Kagaku Dojin, 01 July 2005, 1283
- *Inorganica Chimica Acta,* 1976, vol. 16, 121
- *Bulletin of Chemical Society of Japan,* 1995, vol. 68, 1105
- *Journal of Chemical Crystallography,* 2004, vol. 34, 83
- *Chemische Berichte,* 1994, vol. 127, 465
- *Journal of Chemical Society, Dalton Transactions,* 1996, 1223
- *Journal of Chemical Society, Chemical Communications,* 1990, vol. 64
- *Tetrahedron.,* 1999, vol. 55, 8377
- *Z. Anorg. Allg. Chem.,* 2000, vol. 626, 1934
- **Tatsuhiro Okada et al.** *Journal of Inorganic and Organometallic Polymers,* 1999, vol. 9, 199